# EUROPEAN PATENT SPECIFICATION

(11) **EP 1 812 504 B1**
(45) Date of publication and mention of the grant of the patent: **09.12.2009**
(21) Application number: 05799452.7
(22) Date of filing: 19.10.2005
(51) Int. Cl.: C08K 5/098

(54) **THERMOPLASTIC MATERIAL WITH ADJUSTABLE USEFUL LIFETIME, METHOD FOR THEIR MANUFACTURE AND PRODUCTS THEREOF**
THERMOPLASTISCHES MATERIAL MIT EINSTELLBARER LEBENSDAUER, HERSTELLUNGSVERFAHREN DAFÜR UND PRODUKTE DARAUS
MATERIAU THERMOPLASTIQUE A LA DUREE DE VIE UTILE REGLABLE, PROCEDE DE FABRICATION ET PRODUITS DERIVES

(30) Priority: 22.10.2004 NO 20044563
(43) Date of publication of application: 01.08.2007
(73) Proprietor: Nor-X Industry AS, 6082 Gursken (NO)
(72) Inventor: MÄNNLE, Ferdinand, N-0139 Oslo (NO); RÖDSETH, Kaare Roger, N-6082 Gursken (NO); KLEPPE, Emil Arne, N-6082 Gursken (NO); HAUGE, Roger P., N-6082 Gursken (NO)
(74) Representative: Crawford, Andrew Birkby
(86) International application number: PCT/NO2005/000394
(87) International publication number: WO 2006/043827

(56) References cited:
- WO-A1-2004/094516
- GB-A- 1 342 622
- GB-A- 1 434 641
- US-A- 4 067 836
- US-A- 5 212 219
- US-A- 5 352 716
- US-B2- 6 482 872
- DATABASE CAPLUS [Online] 'Manufacture of light and biologically degradable platics.', XP003019050 Database accession no. (2001:781838) & CN 1 289 792 A

## Description

According to a first aspect the present invention concerns a method for the manufacture of thermoplastic materials with good processibility and adjustable lifetimes for various applications by the use of a suitable combination of oxidizing inhibiting agents and oxidizing agents. According to a second aspect the invention concerns a combination of oxidizing inhibiting agents and oxidizing agents to provide thermoplastic materials with good processibility and adjustable lifetimes for various applications. Furthermore and according to yet another aspect the present invention concerns thermoplastic materials manufacture according to the method of the first aspect of the invention and/ or by use of the combination according to the second aspect of the invention as well as any products manufactured with such thermoplastic materials.

### Background

Thermoplastic material products play an important role in our daily life. Water pipes, car parts and plastic packaging are only a few examples. Such products fulfil strong demands with respect to leakage of unwanted compounds. Products of thermoplastic materials are however often considered environmentally unfriendly. The reason is partially that the thermoplastic material from which the products are made is not well adapted to the particular application in question. Plastic bags left in the nature for years are as unwanted as plastic pipes that dunt after a few years of use. An industrial and widely applicable technology for adjusting the lifetime of thermoplastic products to different areas of application is presently not available. It is therefore an object to develop a technology allowing the manufacture of plastic products with a lifetime that can be controlled according to the actual application. This is particularly relevant for applications in which the thermoplastic product has a function to fill for a certain period of time after which a rapid degradation is desired. One example is agricultural foil for covering young potato plants for 4-6 weeks whereafter the plants penetrate the foil which thereafter should rapidly degrade.

A number of commercial degradable thermoplastic products with a limited lifetime are on the market. In general their lifetimes are not easy to predict and they are useful only for a quite limited area of application. The utilization of such products in different applications, in which different lifetimes of the products are required, has thus not been adequate.

Commercially available and biologically degradable thermoplastics are based on hydrolysable polymers such as polymers of maize starch or lactide based polymers. Degradable lactide based polymers are described e.g. in US 5,908, 918. Advantages and disadvantages of lactide based polymers in general are described in the literature (e.g. by R. Leaversuch, Plastics Technology, March 2002, 50). Disadvantages of lactide based polymers compared to synthetic polymers like polypropylene are lower rupture strength, higher density, poorer properties at elevated temperatures, poorer barrier properties and not least higher price. An advantage of this type of polymer is the possibility of making transparent products and that the degradation may take place rapidly also in absence of light.

A different strategy for making thermoplastics with significantly increased degradability involves the addition of degradation accelerating additives (prodegradants) to commercial thermoplastics like polypropylene or polyethylene. The additions are made to the commercial thermoplastics in the form of concentrated formulations of one or more additive in a convenient matrix material. Such concentrated formulations are called masterbatches. In general one may distinguish between to types of such masterbatches that accelerate degradation of commercial thermoplastics.

In one embodiment the masterbatch include a hydrolysable material such as modified starch or ester based materials (Plastics Technology, October 2002, 60; U.S. 5,461,093 and U.S. 5,091,262). Masterbatches comprising such hydrolysable material are compounded into commercial thermoplastics. When these modified thermoplastics are exposed to heat and humidity over time, the added hydrolysable material becomes hydrolysed thereby rendering the thermoplastic mechanically unstable which leads to enhanced degradation of the thermoplastic material.
Examples are Polystarch N (Willow Ridge Plastics Inc., USA) and Mater-Bi AF05H (Novamont, USA). The advantage of this method is that the degradation is not dependent on light and that the material may thus be used for an extended time under dry conditions while the degradation is comparatively rapid e.g. when the material is composted. The disadvantage is that the hydrolysable material in the thermoplastics generally leads to a poorer quality such as lower rupture strength, poorer properties at elevated temperatures and poorer barrier properties.

In another embodiment a masterbatch is added to a commercial thermoplastic where the masterbatch comprises one or more additives that during influence of light and/ or heat catalyse an oxidative degradation of the thermoplastic. Such oxidizing promoting additives are generally denoted prodegradants. In contradiction to masterbatches with hydrolysable material such additives generally are readily dissolved in commercial thermoplastics. Therefore the properties of the modified thermoplastics are quite similar to the properties of the unmodified thermoplastics. The challenge with this method is to find an additive system that is compatible with the manufacture process of the thermoplastics (film blowing, extrusion, injection moulding, blow moulding). A possible degradation during the manufacture must be eliminated or controlled so that the product gets the desired properties. A particular challenge is that the degradation process takes places much faster when light (particularly with an UV portion) is present than in dark conditions. Thus the additive or the blend of additives must be chosen in such a way that the product maintains its desired properties within a time period suited for storage and/ or use, and still so that degradation elapses quite rapidly when the product becomes discarded.

Known additives leading to accelerated degradation of thermoplastics are metal salts or complex metal compounds in which the metal is able to reversibly change its oxidation state (I.I. Eyenga et. al., Macromol. Symp., 178, 139-152 (2002)). Most used are fat soluble compounds of transition metals like cobalt, cerium or iron (US 20010003797; US 5,384,183; US 5,854,304; US 5,565,503; DE 2244801 B2; US 5,212,219) or formulations of transition metal salts with different types of waxes (US 5,155,155). Examples of degradation-controllable thermoplastics comprising a combination of hydrolysable material and metal salts or complex metal compounds are described in US 5,135,966. In addition to metal salts or complex metal compounds so-called photo initiators, i.e. materials that under influence of light form radicals, may also be included (US 4,517,318; US 4,038,227; US 3,941,759).

Synthesis of stearates such as iron (ferric) stearate is described in periodicals (H.B. Abrahamson, H.C. Lukaski, Journal of Inorganic Biochemistry, 54, 115-130 (1994)) and patent publications (US 5,434,277).

Utilization of iron stearate rather than other transition metal compounds in degradation-controllable thermoplastics does not lead to spill of compounds that can be harmful to the environment. With respect to approval of degradation-controllable thermoplastics for indirect contact with food articles, the restrictions for iron compounds are less demanding than for other transition metal compounds.

A challenge of the manufacture of products based on degradable thermoplastic materials is that the processing takes place at a high temperature, typically between 180 and 300°C. Typical manufacture processes involves film blowing, blow moulding, thermoforming rotational moulding or injection moulding. It will be an object to provide a sufficiently high number of stable radicals as soon as the thermoplastic material is heated. Such stable radicals will inhibit oxidative degradation during processing of the thermoplastic material even in combination with prodegradants.

Another challenge is to be able to control the lifetime of a product based on a thermoplastic material to an extent allowing use of the product in applications where a certain lifetime is desired.

The degradation process in a thermoplastic such as a polyolefin mainly takes place according to the mechanisms e.g. described by Hans Zweifel (ed.), "Plastic additives handbook", Hanser, München, 2000, p. 4 and p. 18. Up-take of oxygen leads to formation of hydroperoxides and subsequent oxidative degradation of the thermoplastic by decomposition of the hydroperoxides. Presence of metal compounds such as iron stearate accelerates the decomposition of hydro peroxides. Typical steps in the oxidative degradation f olefins are shown in Formula 1a-1c:

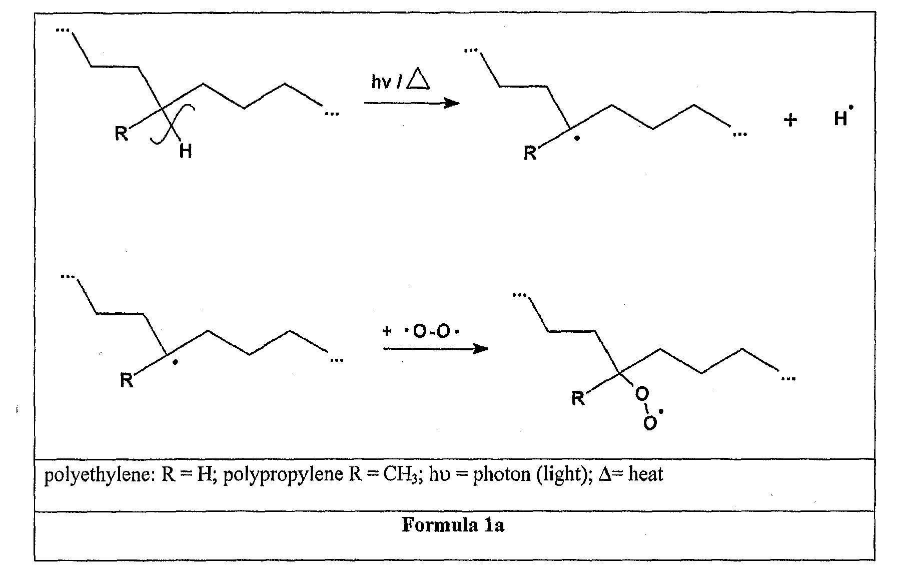

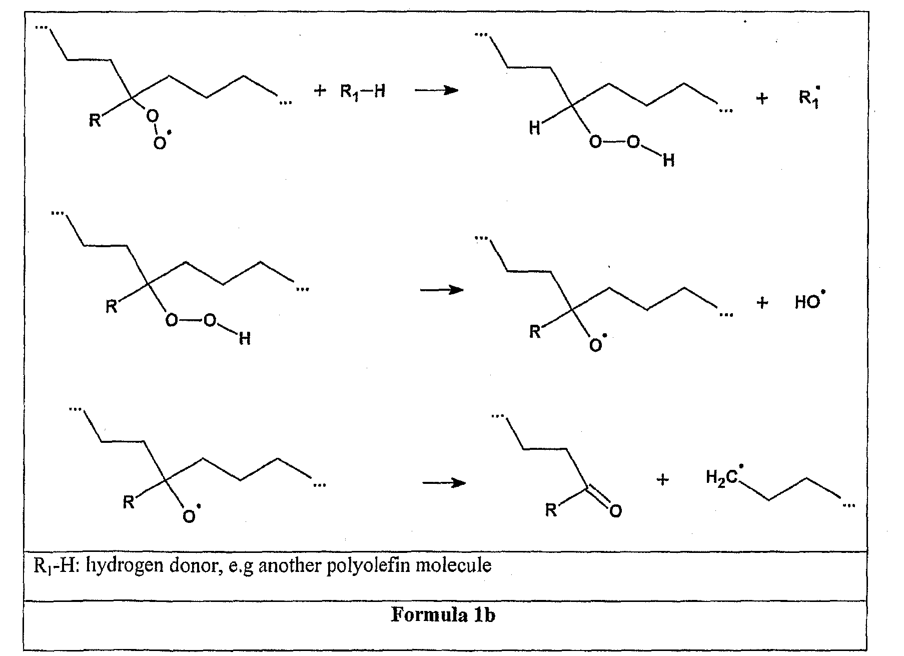

The reactions of Formula 1a and Formula 1b lead to oxidation and a break in the polyolefin chain. This implies i.a. loss of break elongation and stiffness. The polymeric material becomes brittle and the water solubility increases. Similar reactions will take place in most thermoplastic materials.

To avoid or reduce the degradation reactions according to Formula 1a and Formula is stabilizing agents (stabilizers) may be added to the thermoplastic material. Alternatively the degradation reactions according to Formula 1a and Formula 1b may be accelerated by adding oxidizing promoting agents (prodegradants). Table 1 shows typical examples of stabilizing agents used to prolong the lifetime of a thermoplastic material as well as the main oxidizing promoting agents used to shorten the lifetime of a thermoplastic material,

**Table 1**

| **Stabilizers** | **Prodegradants** |
|---|---|
| phenolic antioxidants | Transistion state metals |
| radical scavengers | organic redox systems |
| organic phosphites | peroxides |
| UV absorbers | |
| | |

The stabilizer effect is base don their contribution to prevent of reduce the reactions shown by Formula 1a and Formula 1b. An important common denominator with respect to the stabilizer effect is that the concentration of reactive radicals such as hydroxyl radicals and/ or polymer radicals decreases. Thereby the typical degradation reactions as shown by Formula 1a and Formula 1b are inhibited. Typical reactions for the selected stabilizers are shown by Formula 2a-2d.

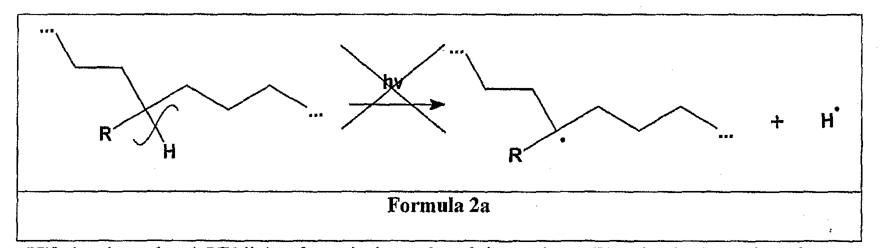

UV absorbers absorb UV light of a typical wavelength λ < 380 nm. Thereby the formation of carbon centred polymer radicals is inhibited (see Formula 1a).

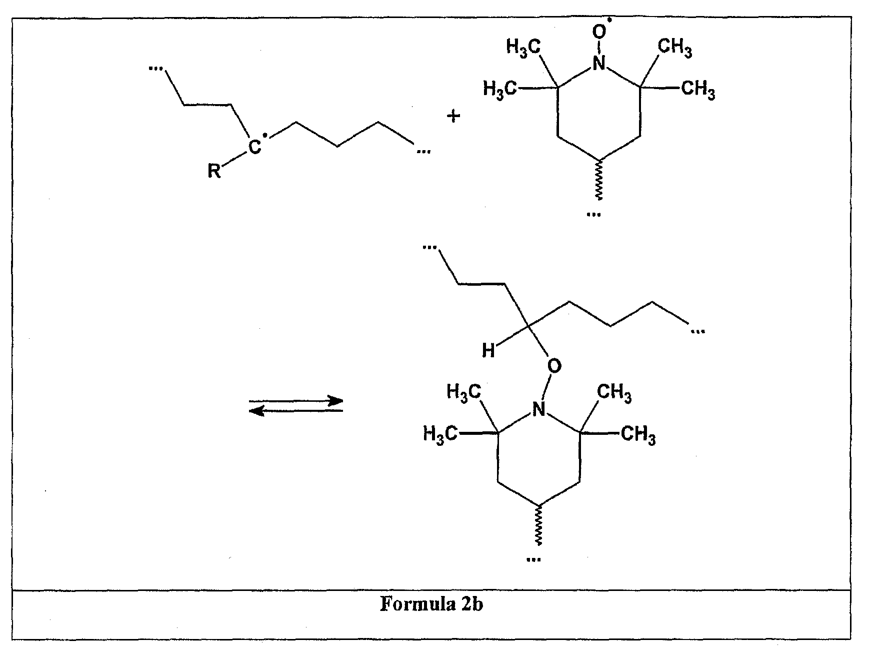

Radical scavengers such as compounds based on tetramethyl-piperidine derivatives, so-called hindered amines, reversibly combine with various types of reactive radicals. This way the concentration of reactive radicals such as carbon centred polymer radicals is reduced.

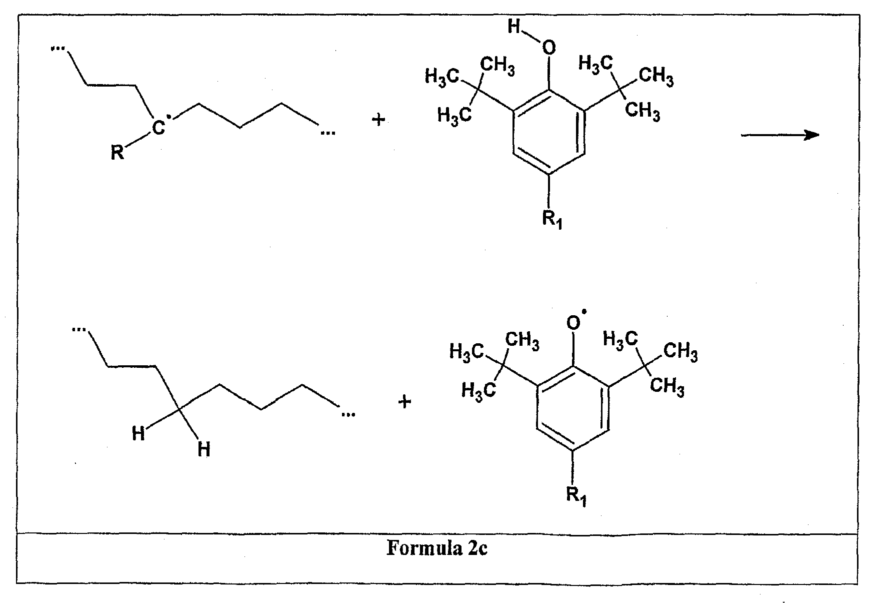

Phenolic antioxidants such as compounds base don 2.6.di-tert-butyl derivatives, so-called hindered phenols, in a first step react with various types of reactive radicals such as carbon centred polymer radicals. Radicals formed by hindered phenols are stable radicals. These radicals can combine reversibly with various types of radicals in the same manner as radical scavengers (see Formula 2b). Antioxidants based on benzofuranone derivatives and hydroxylamines react in a similar manner to hindered phenols.

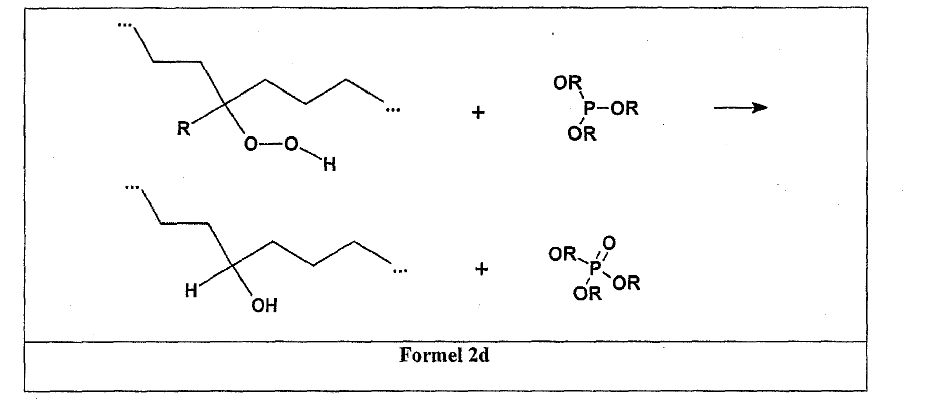

Organic phosphites decompose hydroperoxide groups in the polymer chain. Non-radical compounds thereby are formed. Organic phosiphites react stoichiometrically with hydroperoxide groups in the polymer chain, i.e. decomposition of one mole hydroperoxide groups requires one mole of organic phosphite.

Stabilizers play an important role in industrial processing of thermoplastic materials such as film blowing, extrusion, injection moulding, blow moulding, thermoforming and rotational moulding. The thermoplastic materials must have good processibility at temperatures typical for such processing methods. It therefore must be ensured that the thermoplastic material does not degrade significantly during such industrial processing. Suitable stabilizers, so-called process-stabilizers, hold the concentration of reactive radicals such as hydroxyl radicals or polymer radicals at a low level, mainly by reactions as described by Formula 2c and 2d. Typical process stabilizers are mixtures of hindered phenols and organic phosphates. In addition benzofuranone derivatives or hydroxylamines are used, partly in combination with organic phosphates and/ or hindered phenols.

Stabilizers that inhibit degradation of thermoplastic materials when the industrial processing is completed, i.e. during storage or use of the thermoplastic materials, are denoted long-term stabilizers. Long-term stabilizers hold the concentration of reactive radicals such as hydroxyl radicals or polymer radicals at a low level, mainly by reactions as described by Formula 1a-1c. Typical long-term stabilizers are hindered phenols, UV absorbers and combinations thereof.

The effect of prodegradants is the initiation or acceleration of reactions as shown by Formula 1a and 1b. An important common feature in the effect caused by prodegradants is that the concentration of reactive radicals such as hydroxyl radicals or polymer radicals increases. Thereby degradation reactions as shown by Formula 1a and Formula 1b are initiated or accelerated. Typical reactions by prodegradants such as compounds of transition state metals are shown by Formula 2e.

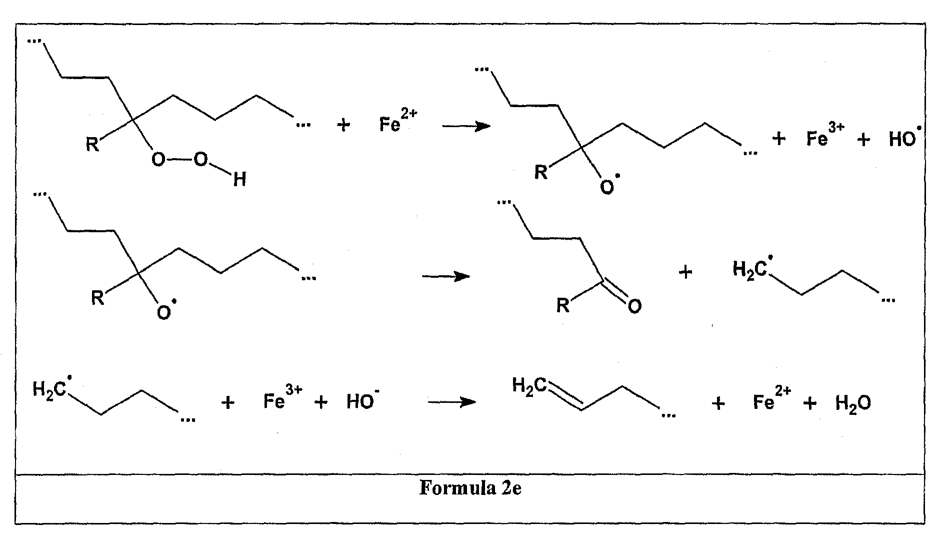

Prodegradants such as the priory mentioned iron compounds decompose hydroperoxide groups in the polymer chain. Mainly radical compounds thereby are formed. The iron compound acts as a catalyst in that the decomposition of one mole of hydroperoxide groups requires significantly less than one mole of iron compound.

The effect of stabilizers in thermoplastic materials is thus opposite to the effect of prodegradants in thermoplastic materials.

The interaction between metal compounds based on cobalt and iron is also known from curing of resins based on unsaturated polyester. The addition of a suitable peroxide would in principle start the curing process by means of a metal compound influenced decomposition of peroxides and thereby the formation of free radicals that would polymerize unsaturated double bonds in the polyester resin. An immediate start of the curing process subsequent to the addition of peroxides is however undesired, since important properties such as viscosity will change continuously during the curing and thereby render it difficult to apply the resin to a surface. Therefore an antioxidant that effectively reacts with the peroxide to avoid the curing for a suitable period of time is generally added. This period of time is often called gel time or induction time. Following this period of time the antioxidant has been consumed and the curing of the polyester generally takes place quite rapidly.

In a corresponding manner it might be assumed that such an antioxidant could be used to delay the degradation process in a thermoplastic with metal compounds such as iron stearate. US 5,212,219 mentions use of an antioxidant in combination with an organic salt of a transition metal compound in a thermoplastic material to obtain an induction time before the rigidity of the thermoplastic is rapidly reduced. US 5,212,219 does not describe use of different antioxidants or different concentrations of a certain type of oxidant to control the degradation time. Some examples with somewhat different degradation time of thermoplastic compositions are shown. It is however not disclosed if or how antioxidants affect degradation time. The types of antioxidant mentioned in these examples are frequently used ingredients in all commercial types of thermoplastics.

A priory known method for the manufacture of thermoplastic products with controllable lifetime involves the use of different stabilizers and combinations of stabilizers in a thermoplastic material. The disadvantage of this method is that the lifetime of such thermoplastic products manufactured under controlled and stable industrial processing conditions is in the range from several months to several years. Another disadvantage is that the period from the product is no longer useful until it is decomposed may be 6-12 months or more. A typical definition for the period in which the thermoplastic product is useful ("useful lifetime") is the period in which the tensile strength of the product (ISO 527-3) remains at least 50 % of the original value. A typical definition of the lifetime of a thermoplastic product, the time until it decomposes to minor particles, is the time elapsing until the tensile strength is less than 10% of its original value. Other used definitions for lifetime of plastic products is a break elongation less than 5 % and/ or a carbonyl index larger than or equal to 0.10 and/ or a molecule weight less than 10 000.

Typical diagrams of break elongation versus lifetime of polypropylene tape stabilized with different stabilizers are shown in Hans Zweifel (ed.), "Plastic additives handbook", Hanser, München, 2000, p. 249. A particular feature of thermoplastic products containing stabilizers that cause a long useful lifetime is that the time period from the product is no longer useful until it is decomposed is comparatively long. Therefore thermoplastic products with adjustable lifetime merely based on use of stabilizers and/ or combinations thereof are not well suited in the manufacture of products that do not contaminate the environment when the useful lifetime has passed.

The WO 2004/ 094516 publication discloses a method for the manufacture of an additive to thermoplastic materials providing a controlled degradation of the thermoplastic materials. The cornerstone of the process is to allow a metal salt at its highest stable oxidation state react with a fatty acid or fatty acid derivative under formation of a fat-soluble metal compound and at least one volatile reaction product in a process in which a suitable oxidizing agent ensures that all the metal in the end product is held at its highest stable oxidation state. The use of oxidizing agent in this process is limited to ensure that all metal in the fat-soluble metal compound remains at its highest stable oxidation state. WO 2004/094516 does not discuss manufacture and use of a prodegradant in the form of a fat-soluble metal compound manufactured by allowing a metal salt react with a fat-soluble organic compound in a process in which a suitable oxidizing agent is included that contributes significantly to ensure that the oxidation ability of the end product versus a defined reduction agent is larger than for a reference product manufactured from same metal salt and same fat-soluble organic compound without use of such oxidizing agent. WO 2004/094516 concerns degradation controlled thermoplastic materials that can be manufactured in very light colours and that are not more rapidly degraded than allowing traditional industrial processing methods for plastic materials to be used. WO 2004/094516 does discuss degradation controlled thermoplastic materials and combinations of fat-soluble metal compounds in combination with various other additives. It does not, however, discuss a combination of prodegradants and specific groups of stabilizers that are able to provide a degradable thermoplastic material containing such additive combinations with specifically controlled lifetimes.

### Objectives

It is an object of the present invention to provide a method for the manufacture of a thermoplastic material with good properties in terms of processibility and adjustable lifetime for different areas of application by use of oxidizing inhibiting additives and oxidizing promoting additives in a suitable combination.

It is a further object to provide combinations of oxidizing inhibiting additives and oxidizing promoting additives that is able to provide thermoplastic materials with good processibility and adjustable lifetime for different areas of application.

### The present invention

With the term thermoplastic material as used herein is understood thermoplastic materials and products thereof that with a defined temperature between 0 °C and 30°C have an adjustable lifetime from 3 days to 5 years. With the term "lifetime" as used herein is understood the period of time elapsing until the tensile strength (according to ISO 527-3) has become less than 10 % of its original value. The concrete lifetime referred to is lifetime according to ISO 4892-3 (60 °C/ 40 °C), implying accelerated degradation and hence shorter lifetime than the products will exhibit under regular use.

According to a first aspect the present invention concerns a method for the manufacture of thermoplastic materials with good processibility and adjustable lifetime for different areas of application by use of oxidizing inhibiting agents and oxidizing promoting agents in a suitable combination, the method being defined by the characterizing part of claim 1.

According to another aspect the invention concerns a mixture of oxidizing inhibiting agents and oxidizing promoting agents that are able to provide thermoplastic materials and combinations thereof with good processibility and adjustable lifetime in different areas of applications as defined by claim 33.

According to a third aspect the invention concerns, as defined by claim 45, thermoplastic materials manufactured according to the method of the first aspect of the invention and/ or with the mixture according to the second aspect of the invention. Finally the present invention concerns products of such thermoplastic materials manufactured by different industrial processing methods as defined by the claims 45, 47, 49, 51 and 53.

Preferred embodiments of the invention are disclosed by the dependent claims.

With the term "reduction agent" as used herein is understood any chemical compound, neutral or ionic that is oxidizable in contact with the end product of the method according to the first aspect of the invention. The reduction agent does not constitute part of the invention as such and should rather be regarded as a means to test whether or not a certain product is within the inventive definition or not.

A suitable reduction agent is a reduction agent that in presence of a reducible complimentary component in the product is able to become oxidized while the complimentary component in the product is reduced. That means that one molar equivalent of a suitable reduction agent may be quantitatively oxidized by one molar equivalent of the complimentary component. Examples of suitable reduction agents for products according to the present invention are iodide and tris(2,4-di-tert-butylphenyl) phosphite.

The oxidizing ability of products according to the present invention with respect to a suitable reduction agent is higher than that of a reference product. The oxidizing ability Pᵢ of products according to the present invention is higher than the oxidizing ability Pᵣ of a reference product if a certain amount of product according to the invention oxidizes more reduction agent than do the same amount of the reference products, with generally equal conditions.

The effect of stabilizers in thermoplastic materials is generally opposite the effect of pradegradants in thermoplastic materials. The addition of stabilizers to a thermoplastic material generally increases the lifetime of the thermoplastic materials while addition of a prodegradant usually reduces the lifetime of the thermoplastic material. Use of suitable combinations of stabilizers and prodegradants in a certain thermoplastic material or combination of thermoplastic materials renders it possible to manufacture thermoplastic materials with adjustable lifetimes for different areas of application. In order to be able to manufacture such thermoplastic materials by industrial plastic processing methods such as film blowing, extrusion, injection moulding, blow moulding, thermoforming, and rotational moulding the thermoplastic materials need to have good processibility at temperatures typical for the mentioned processing methods. It is thus a condition that the prodegradant does not overrule the effect of an added process stabilizer before the processing is completed. The present invention allows exactly that. Such an overruling may occur if the activity of the prodegradant is significantly higher than the activity of the process stabilizer or if the concentration of the prodegradant is significantly higher than the concentration of the process stabilizer. Important aspects in the manufacture of thermoplastic materials with good processibility and adjustable lifetime for different areas of application by use of combinations of oxidizing inhibiting agents (process stabilizers and long-term stabilizers) and oxidizing promoting agents (prodegradants) therefore are activity, stability, and concentration of the process stabilizer, activity, stability, and concentration of the long-term stabilizer, activity, stability and concentration of the prodegradant and the composition of the thermoplastic material.

Table 2 shows typical suitability of different types of stabilizers as process stabilizer and long-term stabilizer.

**Table 2**

| Type of stabilizer | Suitability as long-term stabilizer | Suitability as process stabilizer |
|---|---|---|
| Hindered phenols | Yes | Yes |
| Hindered amines | Yes | No |
| Organic phosphite | No | Yes |
| Hydroxylamine | No | Yes |
| Lactone | No | Yes |
| Alfa-tocoferol | No | Yes |

The most significant difference between a process stabilizer and a long-term stabilizer is described below.

A suitable process stabilizer rapidly forms stable radicals when a thermoplastic material is heated and melted. The radical concentration formed by a suitable process stabilizer is high enough and stable enough to prevent degradation of the thermoplastic material as long as the industrial processing is going on. A pure process stabilizer is consumed or inactive, i.e. no longer radical forming, when the processed thermoplastic material has been cooled, typically to ambient temperature. Typical stabilizers that can be used as process stabilizers are organic phosphites, hydroxylamines, lactones and alfa-tocoferol.

A suitable long-term stabilizer, as opposed to a process stabilizer, forms radicals when the industrial processing is completed and the processed thermoplastic material has been cooled, typically to ambient temperature. A typical long-term stabilizer usually does not form radicals during the industrial processing at a rate sufficiently rapid to establish a concentration of radicals high enough to prevent degradation of the thermoplastic material during this stage. Typical stabilizers for use as long-term stabilizers only are hindered amines.

Hindered phenols can be well suited both as process stabilizers and long-term stabilizers since they form stable radicals both during the industrial processing of the thermoplastic materials and after the thermoplastic materials have been cooled, typically to ambient temperature. In case a hindered phenol only is used as a process stabilizer, all of it must be consumed and degraded to components that do not form radicals when the processed thermoplastic materials have been cooled.

A simple way of measuring activity and stability of a process stabilizer is to measure long-term intensity and stability of the radicals formed by the process stabilizer in the industrial processing (see Formula 1c) by means of electron spin resonance (ESR). The method of determining activity and stability of process stabilizers by means of electron spin resonance is called the ESR method and is i.a. described in "Electron spin resonance imaging of polymer degradation and stabilization", Marco Lucarini, Gian Franco Pedulli, Mikhail V. Motyakin and Shulamith Schlick, Progress in Polymer Science, Vol. 28 (2), 2003, s. 331-340. Results achieved with the ESR method usually correspond well with methods that survey activity and stability of the process stabilizer, like repeated extrusion as described by Hans Zweifel (ed.), "Plastic additives handbook", Hanser, München, 2000, pp. 23-28. High intensity of the ESR signal implies a high number of stable radicals. Thus an ESR signal of high intensity which is stable over time is an indication of a process stabilizer with a high activity and stability.

The prodegradants can contribute to increase the activity of a process stabilizer which immediately may seem strange but need not be unfavourable. Such an increase may occur if the amount of stable radicals formed during certain processing conditions with a certain concentration of process stabilizer in the presence of a prodegradant is larger than when the prodegradant is absent. Typical reactions in such cases are shown by Formula 3.

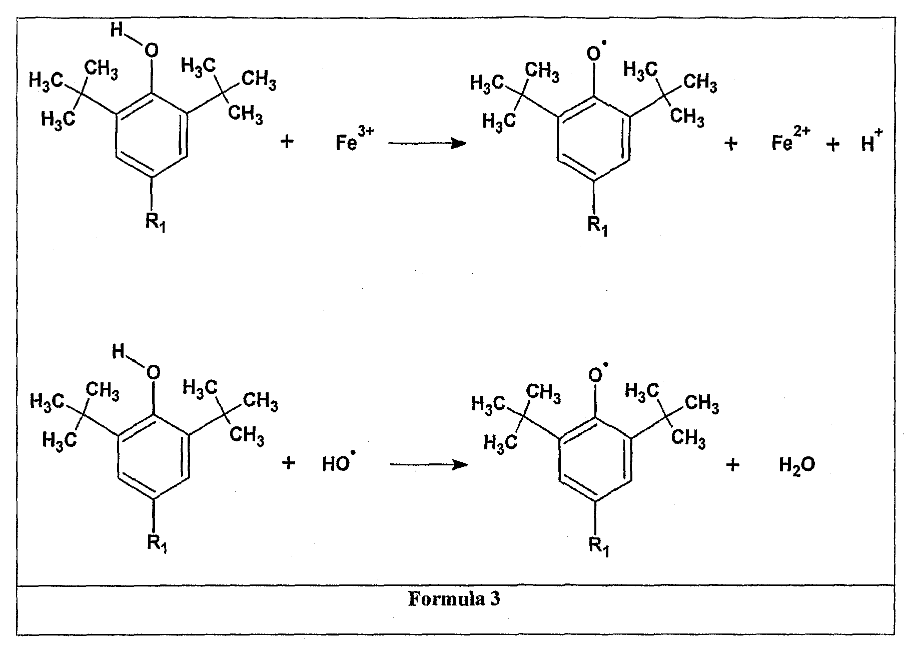

Instead of Fe³⁺ other metal ions having oxidizing properties or other oxidizing substances such as quinones can be used. Hydroxyl forming radicals are formed e.g. by influence of a prodegradant on suitable chemical compounds (see Formula 2e). Instead of hydroxyl radicals also other radicals formed by influence of a prodegradant may be active. Antioxidant based on benzofuranone derivatives and hydroxylamines and radical scavengers based on tetramethylpiperidine derivatives react in a manner corresponding to hindered phenols.

Results of the ESR method with respect to the influence of a type of prodegradant on two types of process stabilizers are shown by the enclosed examples.

The stability of a radical that is formed by a process stabilizer depends on the radical's chemical structure. In the case where the process stabilizer is a phenolic antioxidant the stability as known depends on the substituents in 2^{nd} and 6^{th} position of the phenolic group (Hans Zweifel (ed.), "Plastic additives handbook", Hanser, München, 2000, s. XX). This is shown by Formula 4.

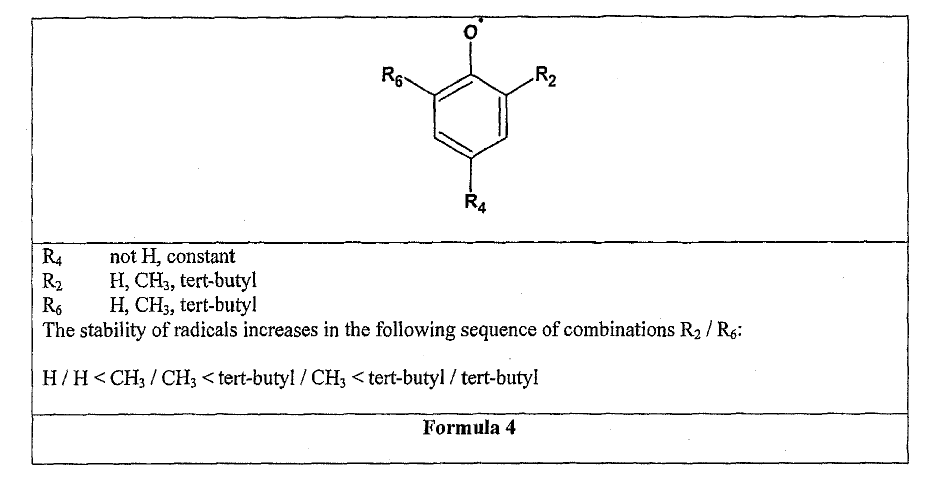

The stability sequence is explained by the steric size of substituents. Tert-butyl groups shield the oxygen based radical centre best from reacting further to thermodynamically more stable, non-radical groups. Such reactions usually lead to oxidation products of the process stabilizer and may therefore be denoted oxidative degradation of the process stabilizer.

In case R₂ and R₆ in two different hindered phenols are equal and R₂ / R₆ are either methyl or tert-butyl, R₄ has a decisive influence on the activity and stability of the radical formed during the industrial processing. Process stabilizers among hindered phenols may thus be chosen with regard to the R₄ substituent to obtain different activity and lifetime as process stabilizer. This is also the case if one or more process stabilizers are used in combination with one or more prodegradants. Therefore thermoplastic materials may be produced with sufficient processibility ensured by a convenient combination of process stabilizer with suitable stability and a prodegradant.

The lifetime of a thermoplastic material after completed processing depends on the type of thermoplastic material or combination of thermoplastic materials, activity and concentration of long-term stabilizer or long-term stabilizer mixture, activity and concentration of prodegradants and conditions for storage and use. For a defined type of thermoplastic material or mixture of thermoplastic materials, a defined activity and concentration of long-term stablizers, a defined activity and concentration of prodegradants, and defined conditions of use and storage the lifetime of the thermoplastic material mainly depends on the stability of the long-term stabilizer or mixture of stabilizers.

As an example the stability against oksidative degradation of different UV absorbers can be mutually classified as follws: Sanduvor PR-25< Chimasorb 81 ≈ Cyasorb UV 5411 < Tinuvin 326 < Tinuvin 1577. Chemical strucrtures of these UV absorberes are shown in Formula 5.

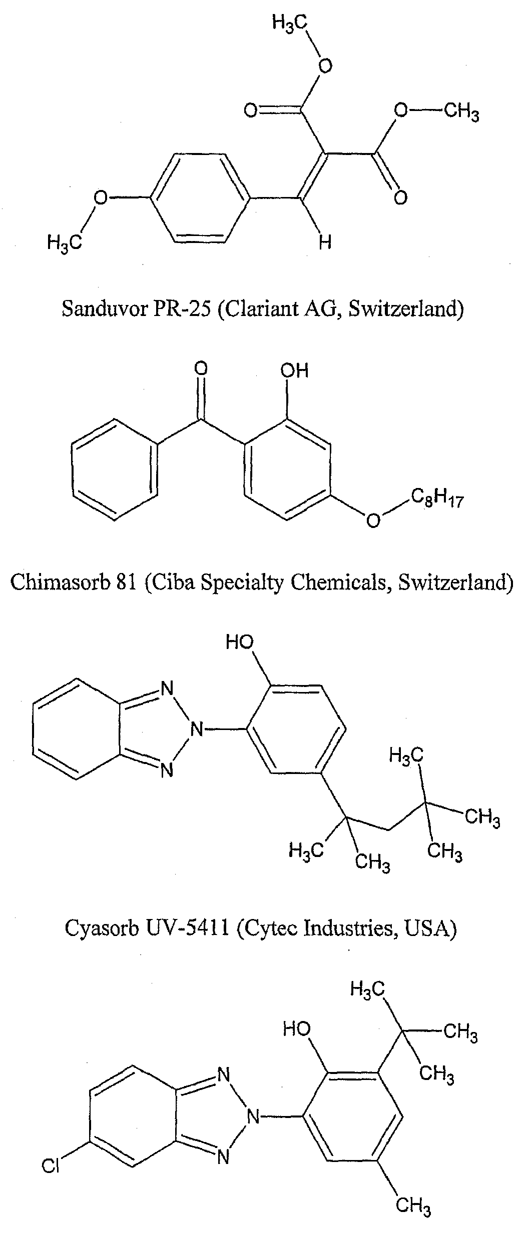

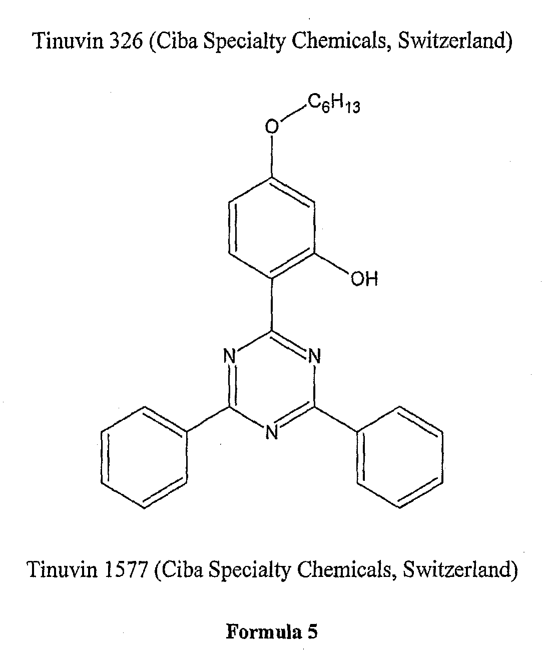

Use of such UV absorbers in combination with prodegradants according g to the present invention provides a modified useful lifetime and lifetime that depends on the stability of the UV absorber in question against oxidative degradation. It has also found that by convenient combinations of prodegradants and stabilizers as mentioned above it is possible to largely adjust the useful lifetime and lifetime of a certain thermoplastic material in accordance with different needs, since the rapid degradation caused by the prodegradant can be controlled and modified by the type and amount of the known UV absorber added. UV absorbers with a generally high stability in their isolated state increase the degradation time more than do UV absorbers with lower stability. Thus a combination of a prodegradant according to the invention and Tinuvin 1577 gives a significantly longer useful lifetime and lifetime than the combination of the prodegradant and Sanduvor PR 25.

Many radical scavengers are based on 2,2,6,6-tetramethylpiperidine derivatives. Chemical structure of some such radical scavengers are shown in Formula 6.

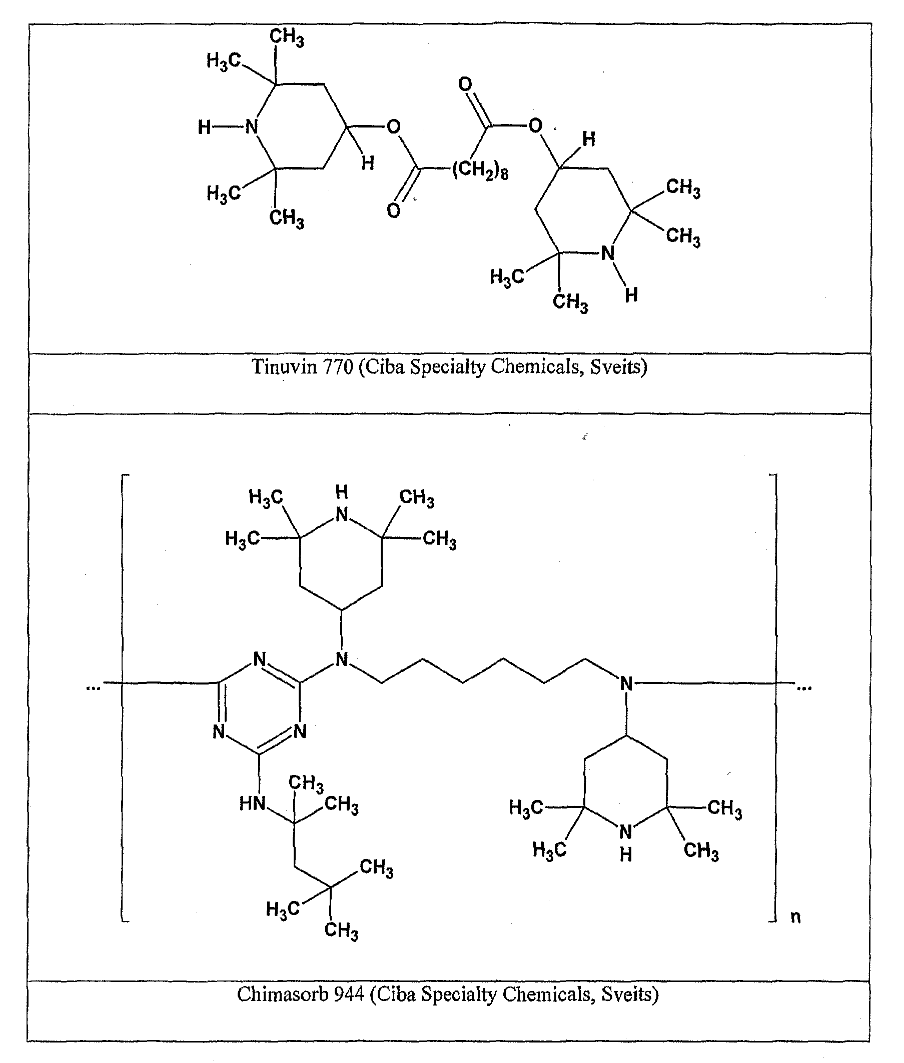

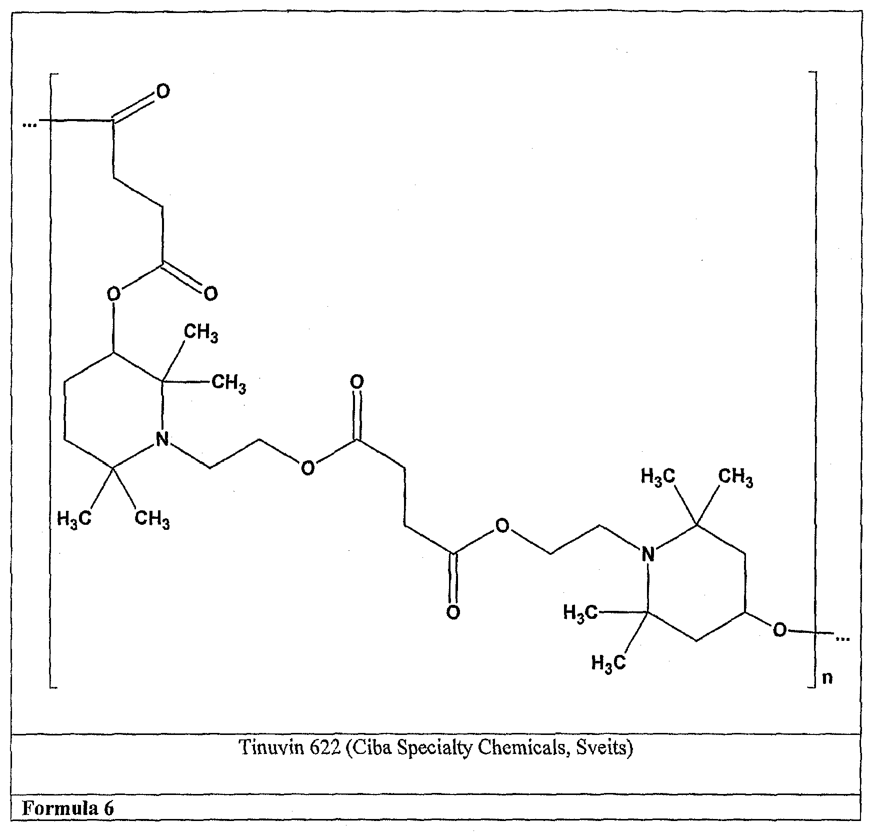

The stabilities of Tinuvin 770, Chimasorb 944 and Tinuvin 622 against oxidative degradation are known as such and can be mutually classified as follows: Tinuvin 770 < Chimasorb 944 < Tinuvin 622. Different stability of hindered amines is due to different molecular weights and the manner with which the 2,2,6,6-tetramethylpiperidin group is attached to a basic structure. Lower molecular weights also means that a higher volatility and thereby reduces activity of a hindered amine (Hans Zweifel (ed.), "Plastic additives handbook", Hanser, München, 2000). The effect on the lifetime of the thermoplastic material is comparable to a hindered amine having a lower stability against oxidative degradation.

The stability against oxidative degradation of Tinuvin 770, Chimasorb 944 og Tinuvin 622 in the presence of a prodegradant can thus be classified: Tinuvin 770 < Chimasorb 944 < Tinuvin 622. It is thus possible to prepare thermoplastic materials with adjustable lifetimes for different areas of application by the use f prodegradants and radical scavengers based on 2,2,6,6-tetramethylpiperidin derivatives in a suitable composition.

As shown in table 2 hindered phenols may be used as long-term stabilizers. Te stability of hindered phenols used as long-term stabilizers generally follows the same criteria as those valid for the stability of the hindered phenols used as process stabilizers. It is thus possible to prepare thermoplastic materials with adjustable lifetime for different areas of applications by use of prodegradants and hindered phenols in a suitable combination.

Examples of stabilizers that in combination with a prodegradant can provide thermoplastic materials with adjustable lifetime are listed below.

| *Phosphites:* | |
|---|---|
| tetrakis(2,4-di-tert-butylphenyl)[1,1-biphenyl]-4,4'-diylbisphosfonite | [119345-01-6] |
| tris(2,4-ditert-butylphenyl)phosfite | [31570-04-4] |
| phosphoric acid monoethyl-bis[2,4-bis(1,1-dimethylethyl)-6-methylphenyl-ester | [145650-60-8] |

| *Thiosynergists;* | |
|---|---|
| dodecyl-3,3'-dithiopropionate | [123-28-4] |

| *Hindered phenoles:* | |
|---|---|
| tetrakis(3-(3,5-di-tert-butyl-4-hydroxyphenyl)propionyl pentaerytrite | [6683-19-8] |
| 1,3,5-tris-(3 ,5-di-tert-butyl-4-hydroxyphenyl)methyl-2,4,6-trimethylbenzene | [1709-70-2] |
| 6,6'-di-tert-butyl-2,2'-thiodi-p-cresol | [90-66-4] |
| (3,5-di-tert-butyl-4-hydroxyphenyl)benzoic methylate | [2511-25-3] |
| (3,5-di-tert-butyl-4-hydroxyphenyl)benzoic hexadecylate | [067845-93-6] |

| *Hydroquinone compounds:* | |
|---|---|
| 2,5-di-tert-butyl hydroquinone | [88-558-4] |

| *C-H acid radical scavengers:* | |
|---|---|
| 3-xylyl-5,7-di-tert-butyl-benzofuranone | [181314-48-7] |

| *Hydroxyl amines:* | |
|---|---|
| distearylhydroxyl amine | [143925-92-2] |

| *Hindered amines:* | |
|---|---|
| N,N'''-[1,2-ethane-diyl-bis[[[4,6-bis[butil(1,2,2,6,6-pentamethyl-4-piperidinyl)amino]-1,3,5-triazin-2-yl]imino]-3,1-propanediyl]]-bis[N',N''-dibutil-N',N''-bis(1,2,2,6,6-pentamethyl-4-piperidinyl)-2,4,6-triamino-1,3,5-triazine | [106990-43-6] |
| Bis(2,2,6,6,-tetramethyl-4-piperidyl)sebaceat | [52829-07-9] |

| *UV absorbers:* | |
|---|---|
| 2-hydroxy-4-(octyloxy)-benzophenone | [1843-05-6] |
| 2-benzotriazol-2-yl-4,6-di-tert-butylphenole | [3846-71-7] |

Each of the above mentioned substances can, alone or in combination with others, constitute preferred stabilizers according to the method and the mixture of the present invention, dependen on application and desired lifetime.

Typical useful lifetimes and total lifetimes obtainable by a thermoplastic product manufacture from a mixture of 50 % polypropylene homopolymer (PP homo) and 50 % linear low density polyethyelene (LLDPE) comprising process stabilizers, 0.5 % prodegradant according to the invention and suitable long-term stabilizer are shown in table 3. The useful lifetime is based on a tensile strength (ISO 527-3) at least half of the original value. The lifetime (degradation time) is based on the thermoplastic product decomposing, reaching a tensile strength as low as 10 % of its original value. Useful lifetime and lifetime in table 3 are presented in accordance with an accelerated ageing test with UVCON weather-o-meter according to ISO 4892-3 (as shown by the examples)

**Table 3**

| **Long-term stabilizer** | **Useful lifetime** | **Lifetime** |
|---|---|---|
| None | 0.5 -1 days | 3 - 4 days |
| UV absorber | 2 - 4 days | 6 - 12 days |
| Phenolic antioxidant | 2 -3 days | 4- 8 days |
| Hindered amine, low molecular weight | 8 -10 days | 20-25 days |
| Hindered amine, high molecular weight | 40 - 45 days | 60 - 70 days |

Other lifetimes can be achieved by mixing different types of long-term satbilizers, e.g. UV absorber and hindered amine.

### Preferred embodiments

The choice of oxidizing agent is not critical but hydrogen peroxide is an example of a very well suited oxidizing agent and preferable in the form of diluted aqueous solutions of hydrogen peroxide, particularly 0.1 to 5 % aqueous hydrogen peroxide solutions. Other suitable oxidizing agents are organic peroxides and hydro peroxides as well as air and oxygen enriched air.

The metal salt can be salt of many types of organic or inorganic acids, such as hydrochloric acids, with which the metal salt will be a chloride. The fat-soluble organic compound can have many different forms. Fatty acids and fatty acid derivatives have been found to be well suited and particularly C₈- C₂₄ saturated or unsaturated fatty acids or derivatives thereof. It has often proved valuable to add the fat-soluble organic compound in a stoichiometric excess compared to the metal salt. The degree of such excess may vary widely and is normally within a factor 1.2 to 100. A typical excess factor is 3.

In a particular and in some situations preferred embodiment the fat-soluble organic compound and the metal salt are identical compounds. It is preferred that the metal salt is fat-soluble also when it is not identical with the fat-soluble organic compound. Typically the anionic part of the metal salt is an anion formed by the removal of a proton from a fat-soluble organic compound.

Particularly advantageous results have been obtained when the fat-soluble metal compound is washed with an aqueous solution of hydrogen peroxide to remove any remains of unreacted metal salt, dispersed in an aqueous diluted solution of hydrogen peroxide at 50-70°C for 1 to 3 hours and dried.

The oxidizing ability of the prodegradant can be increased by different types of treatment such as heat treatment, treatment with oxygen containing or oxidizing substances or with a combination of such substances. In some cases the oxidizing ability can be increased also by storage of the prodegradant.

The metal of the metal salt is practically non-limiting, except that for practical reasons it should not be a metal that is very expensive or constitute an environmental hazard. Suitable metals for the salt are Sc, Ti, V, Cr, Mn, Fe, Co, Ni, Cu, Ga, Ge, As, Y, Zr, Nb, Mo, Ru, Rh, Pd, Ag, Cd, Hg, Sn, Sb, La, Ce, Pr, Nd, Sm, Eu, Gd, Tb, Dy, Ho, Er, Tm, Yb, Lu, Hf, Ta, W, Re, Os, Ir, Pt, Au, Pb, and Bi. The most preferred metal at present is iron.

The stabilizers are already commented in detail and preferred embodiments of these include phosphites, thiosynergists, hindered phenols, hydroquinone compounds, C-H acid radical scavengers, hydroxylamines, hindered amines, and UV absorbers.

Thermoplastic materials and mixtures thereof in a wide range of types may be used as long as their particular properties are adapted to the actual application. Thus any thermoplastic material or combination thereof may be used when the processibility allows forming of products by extrusion, film blowing, blow moulding, thermoforming, rotational moulding or injection moulding. Polyethyelene (PE) and polypropylene (PP) of various qualities are particularly preferred.

A particularly advantageous prodegradant according to the present invention is manufacturable from ferric chloride as metal, stearic acid as the organic compound and hydrogen peroxide as oxidizing agent. During the manufacture at least one volatile component is formed. A typical volatile component is gaseous hydrochloric acid together with various amounts of gaseous water. Another volatile component is oxygen that may come from a total or partial decomposition of hydrogen peroxide with ferric or ferrous iron as a catalyst.

The conversion between metal salt and fat-soluble organic compound can be conducted so that the prodegradant contains remains of metal salt that has not or only partially reacted with the fat-soluble organic compound. If the metal salt is ferric chloride and the fat-soluble organic compound is stearic acid, the prodegradant can contain ferric chlorine, ferric dichloride monostearate, and ferric chloride distearate. In addition the prodegradant can contain corresponding chemical compounds with the difference that the chloride anion can be wholly or partially substituted by another anion that is available from the reaction mixture. Examples of such anions are HO⁻ or HOO⁻.

The stabilizer mixtures can vary within the row of known stabilizers and combinations thereof. A composition that has been found to be particularly well suited for some applications is comprised by 200 ppm phenolic antioxidant and 600 ppm organic phosphite. This mixture allows the manufacture of thermoplastic materials with an adjustable lifetime within the range from 3 to 12 days based on accelerated ageing according to ISO 4892-3 (as shown by the examples),dependent on amount and type of prodegradant and the quality of the thermoplastic material or mixture of thermoplastic materials, if the phenolic antioxidant is chosen quantitatively and qualitatively with respect to shortest possible lifetime, it may function exclusively as a process stabilizer, i.e. without any significant long-term effect. In such a case as low a concentration as 50-300 ppm may be useful. The amount of organic phosphite can be 0-300 ppm. In use for products based on a typical polypropylene homopolymer, block copolymer or random copolymer the process stabilizer used may be a hindered phenol that is present in a concentration of 50 to 200 ppm.

Another well suited stabilizer is lactone 2 in the examples, 3-xylyl-5,7-di-tert-butyl-benzofuranone that exclusively works as a process stabilizer, not as a long-term stabilizer, which is convenient when particularly short lifetimes are desired for the products. If a lifetime of 1-4 days according to ISO 4892-3 (60 °C/ 40 °C) is desired for the product, it is convenient to use 3-xylyl-5,7-di-tert-butyl-benzofuranone as process stabilizer. When using this particular stabilizer it has also been found that the processibility of the thermoplastic material is at least as good as without the prodegradant in temperatures up to 300°C. With this process stabilizer correspondingly short lifetimes has also been achieved through accelerated ageing in convection ovens at 80 °C without the presence of UV light.

If a lifetime of 4-16 days measured according to ISO 4892-3 (60 °C/ 40 °C) is desired it is convenient to use an aliphatic amine as a stabilizer in addition to the prodegradant.

For lifetimes in the range 5-12 days according to ISO 4892-3 (60 °C/ 40 °C) a good alternative is to use a stabilizer that mainly is a UV stabilizer, cf. table 3. Examples are Sanduvor PR25™, Chimassorb 81™, Cyasorb UV 5911™, Tinuvin 326™, and Tinuvin 1577™. For longer lifetimes, such as 4-13 days when measured according to ISO 4892-3 (60 °C/ 40 °C) phenolic antioxidants may be used as stabilizers when the type and amount is chosen to also obtain some long-term stability.

Hindered amines provide stability over a longer time period than the above mentioned stabilizers, cf. table 3 and the ones with high molecular weight provide a significantly higher stability than those with a low molecular weight. These amines are well suited for obtaining products with lifetimes up to 70 days, e.g. 30-70 days according to ISO 4892-3 (60 °C/ 40 °C) and a useful lifetime of up to 28 days. When using hindered amines with low molecular weight a typical lifetime in the range 15-25 days is obtainable when measured according to ISO 4892-3 (60 °C/ 40 °C).

Further adaptation of lifetime can be achieved by the combination of suitable amounts of two or more of the above mentioned types of stabilizers in one and the same process.

The mixtures according to the invention can be provided in many different forms and concentrates or masterbatches is a particularly convenient form of such an intermediate product.

According to a further aspect the invention concerns any thermoplastic material manufactured from a base thermoplastic such as, but not limited to, polyethylene and polypropylene, by use of any combination of embodiments of the method according to the first aspect of invention or by use of any combination of mixtures of additives as mentioned above.

Furthermore the invention comprises any product and intermediate product of such a thermoplastic material, shaped or processed by any method chosen among film blowing, foil blowing, injection moulding, thermoforming, extrusion and blow moulding.

The products can have the form of films or foils, hereunder bis-oriented films and solar collector foils, foils for agricultural purposes, foodstuff or other packaging etc.

The products can also ha the form of plastic bags or sacks, disposable articles for domestic or industrial use or for use with foodstuff and beverage.

Furthermore the products can be suitable for industrial purposes such as constructional purposes, hereunder products for use in transportation or building constructions, such as soft or rigid plates or ribbons for floors, walls and roofs, insulating materials, fibre shaped or fibre containing materials, hereunder woven and non woven products.

### Examples

### Example 1. Synthesis of fat-soluble iron containing additive (prodegradant)

a) The synthesis of a comparative fat soluble iron containing additive is performed in a heatable 5 litre glass reactor with two charging hoppers, a mechanically powered glass stirrer, a glass jacketed thermometer, a distillation cooler, an adjustable air inlet and a bottom valve. 2.180 kg (7.66 moles) of stearic acid is melted in the reactor. The air inlet rate is adjusted to 200 ml air per minute and the temperature of the reactor is adjusted to 120 °C. 600 g (2.22 moles) ferric(III)chloride hexahydrate is dissolved in 600 ml of water to produce 900 ml aqueous ferric(III) chloride solution. Through one of the charging hoppers melted stearic acid is added to the ferric(III)chloride solution with a rate of 20 ml per minute. The addition of the aqueous ferric(III)chloride solution is adjusted so that the amount of distilled water and hydrogen chloride corresponds to the amount aqueous ferric(III)chloride solution supplied. Continuous supply of air and addition of 2 ml per minute of a 3% aqueous hydrogen peroxide solution through the other charging hopper ensures that the oxidation state (III) of the ferric(III) ions is maintained. After having completed the addition of the aqueous ferric(III)chloride solution the blend is boiled and distilled under continuous addition of air and the addition of 25 ml per minute of a 3% aqueous hydrogen peroxide solution for two hours. Thereafter the iron stearate product is discharged through the bottom valve in 10 litre 3% aqueous hydrogen peroxide solution. When the subsequent gas development is about to end the iron stearate product is filtered from the liquid phase and washed thoroughly with water to remove any remains of ferric(III)chloride. The iron stearate product is then dispersed in a 1% aqueous hydrogen peroxide solution at 45 °C for 2 hours, facilitated by a dispersing rod. The dispersed iron stearate product is filtered from the liquid phase, washed thoroughly with water and dried in a convection oven at 50 °C. The fat-soluble iron containing agent was stored for 12 months at 10-20 °C.
b) The synthesis is performed in an oil thermostated 50 litres double wall glass reactor with two dosage pumps, a mechanically powered Teflon coated steel stirrer, a glass jacketed thermometer, a distillation cooler, a bottom valve, and a connected membrane vacuum pump. In advance a solution of 11.3 kg (41.8 moles) ferric chloride hexahydrate in 10.5 litre water was prepared and 0.11 concentrated hydrochloric acid to provide 21.9 kg aqueous ferric chloride solution with 10.6 % w/w iron. To provide the fat-soluble organic compound 12.9 kg (45.3 moles) stearic acid was melted in the reactor by setting the temperature of the oil thermostat to 190°C. 0.181 low-aromatic white spirit (Statoil AS) and 0.35 1 water were added and the reactor pressure reduced to 200 mbar. By one of the dosage pumps 6.1 kg of the prepared ferric chloride solution was added over a 50 min period. By one of the dosage pumps 10 ml per minute of an aqueous 1 % hydrogen peroxide solution was added to maintain a modest but continuous foaming in the reactor. The addition of the aqueous ferric chloride solution was adjusted so that the amount of distilled water and hydrogen peroxide approximately corresponded to the amount of aqueous ferric chloride solution. After having completed the addition of the aqueous ferric(III)chloride solution the blend was boiled and distilled under continuous addition of 25 ml per minute of a 1% aqueous hydrogen peroxide solution. The amount of distilled water and hydrogen chloride was at this stage higher than the amount of 1% hydrogen peroxide solution so that the amount of water in the reaction mixture was continuously reduced. After the temperature of the reaction mixture had reached 115 °C the reaction mixture was cooled to 100 °C and thereafter drained through the bottom valve into 100 litre of 1% aqueous hydrogen peroxide solution. When the following gas development was about to end the iron containing agent was filtered from the liquid phase. The iron containing agent was then dispersed in a 1% aqueous hydrogen peroxide solution at 60-72°C for 2 hours, facilitated by a dispersing rod. The dispersed iron containing agent was filtered from the liquid phase and dried in a convection oven at 50 °C.
c) In a corresponding manner to Experiment 1b) iron containing agents with various amounts of iron were prepared. These and the iron containing agent from 1b) is listed in table 4. In addition table 4 shows iron content as determined by "ashing" at 550 °C. The iron content was determined under the assumption that the combustion residue is Fe₂O₃. The results are shown in table 4.

**Table 4**

| **Iron containing agent** | **Fat-soluble organic compound (stearic acid) [kg]** | **Added ferric chloride soln. from 1b) in the synthesis [kg]** | **Iron centent [%]** |
|---|---|---|---|
| Batch C | 12.9 | 0.40 | 0.31 |
| Batch A | 12.9 | 0.88 | 0.63 |
| Batch G | 12.9 | 3.42 | 1.91 |
| Batch H | 11.9 | 3.70 | 2.23 |
| Batch I | 10.9 | 4.80 | 2.92 |
| Batch K | 12.9 | 6.10 | 3.58 |

d) In a corresponding manner to Experiment 1b) and 1c) iron containing agents were prepared, except that water was used instead of 1 % aqueous hydrogen peroxide solution. These are thus reference products to the iron containing agents of 1b) and 1c), made from the same metal salt and same fat soluble organic compound but without use of the oxidizing agent used in 1b) and 1c). The results are shown in table 5.

**Table 5**

| **Iron containing agent** | **Fat-soluble organic compound (stearic acid) [kg]** | **Added ferric chloride soln. from 1b) in the synthesis [kg]** | **Iron centent [%]** |
|---|---|---|---|
| Batch P | 12.9 | 0.40 | 0.43 |
| Batch Q | 11.9 | 1.15 | 0.80 |
| Batch R | 10.9 | 2.15 | 1.45 |

e) In a manner corresponding to Experiment 1b) iron containing agents were made from saturated and unsaturated fat-soluble organic compounds. The saturated fat-soluble organic compound was stearic acid that was added as described under 1b). The unsaturated fat-soluble organic compound was only added after all the ferric chloride solution had been added and the temperature in the reaction mixture at 200 mbar had reached 100 °C. Thereafter the same procedure as under 1b) was used. The results are shown in table 6.

**Table 6**

| **Iron containing agent** | **Fat-soluble organic compound # 1** | **Fat-soluble organic compound # 2** | **Added ferric chloride solution in the synthesis [kg]** | **Iron content [%]** |
|---|---|---|---|---|
| Batch B | 9.8 kg stearic acid | 3.1 kg oleic acid | 0.88 | 0.59 |
| Batch D | 9.9 kg stearic acid | 3.0 kg boiled linseed oil | 0.40 | 0.29 |

f) In a corresponding manner to Experiment 1b) metal containing agents with cobalt and cupper were prepared instead of iron. Based on corresponding metal chlorides aqueous metal chloride solutions were prepared with 12.1 % cobalt and 5.4 % cupper respectively. The metal contents were determined by "ashing" at 550 °C. The cobalt content was determined under the assumption that the combustion residue was Co₃O₄, The cupper content was determined under the assumption that the combustion residue was Cu₂O. The results are shown in table 7.

**Table 7**

| **Iron containing agent** | **Fat-soluble organic compound (stearic acid) [kg]** | **Added metal chloride solution in the synthesis [kg]** | **Metal content [%]** |
|---|---|---|---|
| Batch E | 12.9 | 0.42 | 0.025 |
| Batch F | 12.9 | 1.00 | 0.023 |

It is easily recognized that added iron is found in the iron containing agent in a high degree. Added cobalt and cupper, however, are only found in a quite limited degree in the corresponding metal containing agents.

### Example 2. Oxidizing ability of prodegradants with respect to iodide as reduction agent.

The oxidizing ability of prodegradants with respect to a reduction agent was mainly measured as described by J.F. Rabek, Polymer Photodegradation; Mechanisms and Experimental Methods, Chapman and Hall, London (1995). 1 % of the prodegradant was melted with 99 % non-stabilized PP random copolymer and pressed to a thin film (20-40 µm). In addition iodide solutions of 10 g sodium iodide in 50 ml of concentrated acetic acid and 950 ml isopropanol were prepared. 220 mg PP film was heated with 4 ml of iodide solution until boilig started and thereafter cooled. The concentration of the by oxidation formed triiodide ion was photosectrometrically determined at 420 nm with a UV-VIS spectrophotometer with diode array detector (Hewlett-Packard HP 8453). The results are shown in table 8.

**Table 8**

| **additive** | **amount PP random copolymer** | **Relative oxidizing ability measured as absorption at 420 nm [mAU/220mg PP]** | **Relative oxidizing ability measured as absorption at 420 nm [mAU/220mg PP] corrected for pure PP** |
|---|---|---|---|
| Batch G | 219,5 | 0,9641 | 0,3911 |
| Batch H | 219,4 | 0,9029 | 0,3299 |
| Batch K | 216,0 | 1,4523 | 0,8947 |
| Batch B | 218,2 | 0,9122 | 0,3411 |
| Batch D | 218,2 | 0,8339 | 0,2621 |
| Batch E | 218,2 | 1,2083 | 0,6396 |
| Batch F | 219,7 | 1,3681 | 0,7953 |
| Batch P (reference) | 220,4 | 0,7931 | 0,2188 |
| Batch Q (reference) | 218,7 | 0,7614 | 0,1886 |
| Batch R (reference) | 217,8 | 0,7414 | 0,1692 |
| none | 218,0 | 0,5739 | 0,0000 |

The object was to compare the oxidizing ability of batch K, G, H, B, D, E, and F prepared with use of the oxidizing agent hydrogen peroxide (experiment 1b), 1c), 1e), and 1f) with the oxidizing ability of batch P, Q, and R prepared without use of the oxidizing agent hydrogen peroxide (experiment 1d). Therefore the absorption result of an identically treated PP film without prodegradant was subtracted from the other absorption results in the 4^{th} column of table 8. It is easily recognized that a prodegradant in the form of a fat-soluble metal compound prepared by allowing a metal salt react with a fat-soluble organic compound in a process in which the oxidizing agent also is included, exhibits a higher oxidizing ability with respect to the reduction agent iodide than does a reference product prepared from the same metal salt and the same fat-soluble organic compound without the use of such an oxidizing agent. It is furthermore evident that a prodegradant in the form of a fat-soluble metal compound prepared by allowing a metal salt react with a fat-soluble organic compound in a process in which hydrogen peroxide is used as an oxidizing agent and in which the metal salt is based on cobalt or cupper exhibits a higher oxidizing ability with respect to iodide as reduction agent than when the metal salt is based on iron. It is also revealed that storage of a prodegradant can increase its oxidizing ability. Finally it is revealed that a prodegradant in the form of a fat-soluble metal compound prepared by allowing a metal salt to react with a fat-soluble, organic compound in a process in which hydrogen peroxide is used as an oxidizing agent and in which the fat-soluble organic compound partially is comprised by unsaturated fatty acids, exhibits a higher oxidizing ability with respect to iodide as a reduction agent than what is the case when the organic compound merely is comprised by saturated fatty acids.

### Example 3. Oxidizing ability of prodegradants with respect to the reduction agent tris(2,4-ditert-butylphenyl)phosphite.

The oxidizing ability of a prodegradant with respect to the reduction agent tris(2,4-ditert-butylphenyl)phosphite was determined by the following method:

100 mg prodegradant was weighed into an NMR test tube and 20 mg tris(2,4-ditert-butylphenyl)phosphite was added. 1.0 g ortho-dichlorobenzene-d₄ was thereafter added as a solvent. The NMR sample was remelted in air atmosphere and thereby sealed airtight. Thereafter the NMR sample was placed in a heat cabinet at 130 C for homogenization. A ³¹P-NMR-specter was recorded after 1 hour by a Varian NMR-spectrometer (¹H-NMR-resonanz 300 MHz) at a constant sample temperature of 100°C. The ³¹P-NMR resonance of tris(2,4-ditert-butylphenyl)phosphite is easily seen at 132 ppm (reference H₃PO₄). After having recorded the first NMR spectre the NMR sample was placed in a heat cabinet at 150 °C for 20 hours. Then another ³¹P-NMR-spectre was recorded with the NMR sample. On oxidation ³¹P-NMR-resonance of tris(2,4-ditert-butylphenyl)phosphite is reduced. Hence, the higher oxidizing ability of the prodegradant the more rapid the ³¹P-NMR-resonance of tris(2,4-ditert-butylphenyl)phosphite is reduced. Te results are shown in table 9.

**Table 9**

| **Metal containing agent** | **Relative area ³¹P-NMR-resonance at 132 ppm before heating to 150°C** | **Relative area ³¹P-NMR-resonance at 132 ppm after 20 hours of heating at 150°C** | **Relative area after heating at 150°C [%]** |
|---|---|---|---|
| Batch A | 20.2 | 18.3 | 90.6 % |
| Batch B | 20.4 | 19.1 | 93.6 % |
| Batch C | 20.4 | 18.2 | 89.2 % |
| Batch D | 21.6 | 7.6 | 35.2 % |
| Batch E | 15.8 | 9.1 | 57.6 % |
| Batch F | 14.5 | 4.5 | 31.0% |
| Batch G | 14.2 | 13.5 | 95.1% |
| Batch K | 11.5 | 1.8 | 15.7% |
| None | 14.8 | 14.7 | 99.3% |

The ³¹P-NMR-resonances of the batches A, B, C, and D were recorded with somewhat different instrument parameters than the ³¹P-NMR-resonances of the batches E, F, G, and K. Therefore the relative areas of the NMR samples based on A, B, C, and D before heating to 150 C are somewhat higher than the relative areas of NMR samples based on batches E, F, G, and K. This, however, has no influence on the differences in the relative areas of the ³¹P-NMR-resonances before and after heating to 150°C.

The difference in the relative areas before and after heating to 150 C clearly indicated that batches K, E, and F have the largest oxidizing ability in addition to batch D with respect to tris(2,4-ditert-butylphenyl)phosphite as reduction agent. This is consistent with the results of experiment 2. Example 4. Preparation of a masterbatch: Extrusion of a fat-soluble iron product from 1a) and LLDPE.
a) 10% fat-soluble iron product from 1a) was mixed with 90% PP-homopolymer of the type HE125MO (Borealis AS, Roenningen) in a double helical extruder (Clextral) at 190°C and a retention period of 60-70 seconds. The thus manufacture masterbatchen had an even red-brown colour and did not show signs of degradation.
b) 10% fat-soluble iron product from 1b) - 1f) was mixed with 90% LLDPE of the type Exact Plastomer 0230 (ExxonMobil) in a double helical extruder (Clextral) at 150°C and a retention period of 60-70 seconds. The thus manufactured masterbatch did not show signs of degradation.

In the same manner masterbatches were prepared from commercial polymer additives and LLDPE.

### Example 5. ESR-analysis of stabilizers and mixtures of stabilizers and prodegradants

A simple way to measure activity and stability of a process stabilizer is to measure long-term intensity and stability of the radicals formed by the process stabilizer in the industrial processing (see Formula 1c) by means of electron spin resonance (ESR). High intensity of the ESR signal means a high number of stable radicals. Thereby a high ESR signal of a higher intensity indicates that a process stabilizer has a higher activity.

ESR spectre of 0.5% solutions of lactones and phenols with 0.5% prodegradant and without prodegradant in poly-(1-deken) after four minutes at 250°C is shown below:

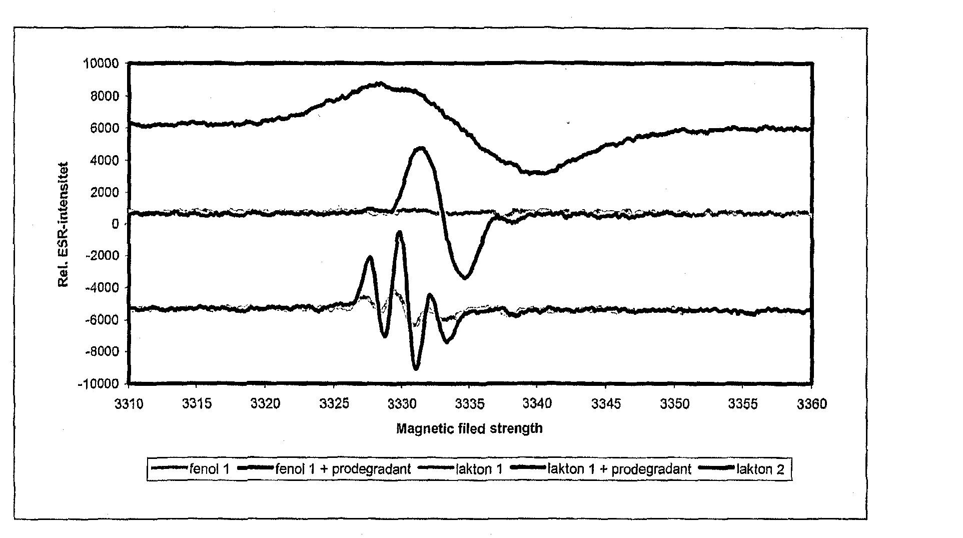

| | | | |
|---|---|---|---|
| Lactone 2 | 3-xylyl-5,7-di-tert-butyl-benzofuranone [181314-48-7] | | top |
| | black:: | without prodegradant | |
| Lactone 1 | 3-xylyl-4,6-di-tert-butyl-benzofuranon | | centre |
| | Svart:: | med prodegradant | |
| | Grått:: | uten prodegradant | |
| phenol 1 | 3,5-di-t-butyl-4-hydroxybenzoic acid hexadecylate [067845-93-6] | | bottom |
| | black: | with prodegradant | |
| | Gray: | without prodegradant | |
| Prodegradant | As prepared in exp. 1a) | | |

Lactone 2 is as well known a very efficient and suitable process stabilizer. Lactone 1 is not suitable as process stabilizer and phenol 1 has a limited valued as process stabilizer. Mixtures of lactone 1 and prodegradant are well suited as process stabilizers and mixtures of phenol 1 and prodegradant are also well suited as process stabilizers.

### Example 6. Test of process stabilizing effects of stabilizers and mixtures of stabilizers and prodegradants when repeatedly extruded.

Another way of measuring activity and stability of a process stabilizer and thereby its process stabilizing effect is to extrude a thermoplastic material containing the process stabilizer five times at high temperature. The process stabilizing effect is determined by measuring the melt index (ISO 1133) after first, third, and fifth extrusion. A good process stabilizing effect of a stabilizer or mixture of stabilizers is characterized in that the melt index does not increase substantially between first and fifth extrusion. ollowing mixtures were compounded at the following temperatures in a Clextral double helical extruder.

**Table 10a**

| Zone | 1 | 2 | 3 | 4 | 5 | 6 | 7 | 8 | 9 | 10 | 11 | 12 |
|---|---|---|---|---|---|---|---|---|---|---|---|---|
| T[°C] | 50 | 140 | 160 | 180 | 190 | 190 | 200 | 190 | --- | 160 | 160 | 160 |

**Table 10b**

| **Name** | **Amount non-stabilized PP random copolymer** | **additive 1** | **additive 2** |
|---|---|---|---|
| 51003-GJEN-3 | 250 g | 75 mg Irgafos XP 60 | --- |
| 51003-GJEN-4 | 250 g | 75 mg Irgafos XP 60 | 13 g 50915-G-10 |

| | | | |
|---|---|---|---|
| Irgafos XP60 (Ciba Specialty Chemicals) is a mixture of 33% w/w 3-xylyl-5,7-di-tert-butyl-benzofuranone [181314-48-7] and 67% bis-(2,4-di-t-butylphenol)pentaerythritol-diphosphite [26741-53-7]. 50915-G-10 is a masterbatch base don Batch G (experiment 1c) manufactured as described in experiment 4b). | | | |

The compounded mixtures were extruded five times at the following temperatures on a Clextral double helical extruder.

**Table 10c**

| Zone | 1 | 2 | 3 | 4 | 5 | 6 | 7 | 8 | 9 | 10 | 11 | 12 |
|---|---|---|---|---|---|---|---|---|---|---|---|---|
| T[°C] | 50 | 140 | 180 | 210 | 250 | 280 | 280 | 220 | --- | 160 | 160 | 160 |

Samples were taken for melt index determination after first, third and fifth extrusion.

**Table 10d**

| **Name** | **MI 1. extrusion** | **MI 3. extrusion** | **MI 5. extrusion** |
|---|---|---|---|
| 51003-GJEN-3 | 22.7 | 30.2 | 39.3 |
| 51003-GJEN-4 | 21.6 | 26.7 | 33.1 |

It is clearly demonstrated that PP random copolymers with lactone based stabilizer and prodegradant according to the present invention is very well workable also at elevated processing temperatures like 280 °C. The increase in melt index from first to fifth extrusion is less with the prodegradant than without it.

### Example 7. Test of long-term stability of a typical stabilizing composition and prodegradants I polypropylene

Based on 10% of the various masterbatches of prodegradant as prepared in experiment 4b) and 90 % of a typical polypropylene homopolymer with a stabilizing mixture of 200 ppm tetrakis(3-(3,5-di-tert-butyl-4-hydroxyphenyl)propionylpentaerythrit and 600 ppm tris(2,4-ditert-butylfenyl)phosphite sample rods were made according to ASTM D3641. The sample rods were aged in a convection oven at 80 °C for 0, 3 and 10 days and thereafter subjected to tests of tensile strength according to ASTM D368. Break elongation of the tensile tests based on the various prodegradants are shown in table 11. The figures are an average value of five tests each.

**Table 11**

| **Metal containing additive** | **Break elongation after 0 days of ageing [%]** | **Break elongation after 10 days of ageing [%]** |
|---|---|---|
| Batch A | 511 | 213 |
| Batch B | 665 | 239 |
| Batch C | 636 | 154 |
| Batch D | 624 | 296 |
| Batch E | 751 | 163 |
| Batch F | 633 | 162 |
| Batch G | 656 | 142 |
| Batch H | 573 | 173 |
| Batch I | 612 | 183 |
| Batch K | 773 | 33 |
| Batch P | 753 | 348 |
| Batch Q | 742 | 274 |
| Batch R | 536 | 333 |

It is clearly demonstrated that all prodegradants cause a significantly reduced break elongation of the PP sample rods after 10 days of ageing at 80 °C compared to the identical sample rods before ageing. It is clearly visible that a prodegradant manufactured by allowing a metal salt to react with a fat-soluble organic compound in a process in which hydrogen peroxide is used as an oxidizing agent (batches A, C, G, H, I, and K) lead to a shorter break elongation for PP sample rods after 10 days of ageing than does a reference product manufactured from the same metal salt and same fat-soluble organic compound without the use of such an oxidizing agent (batches P, Q, and R).

### Example 8. Thermic ageing of PP random copolymers with lactone based stabilizing mixtures, a prodegradant and stearylamine.

2.5 grams of fat-soluble iron product Batch G from 1c) was mixed with 1.5 grams of stearylamine, 150 mg of Irgafos XP60™ and 496 grams of non-stabilized PP random copolymer in a double helical extruder (Clextral) at 190°C using a retention period of 60-70 seconds. 5 grams of extruded mixture was immediately after extrusion pressed to a 0.5 mm thick sheet at 210 °C and 16 bar pressure. The sheet was than aged in a convection oven at 80°C. The carbonyl index was determined as described in J.F. Rabek, Polymer Photodegradation; Mechanisms and Experimental Methods, Chapman and Hall, London (1995). The carbonyl index was calculated as quotient ofFT-IR absorptions 1715 cm⁻¹ /1375 cm⁻¹. The results before ageing (0 days of ageing) and after 3 days and 8 days of ageing at 80 °C are shown in table 12. In addition the observed ductility / brittleness of each sample is listed.

**Table 12**

| | 0 days of ageing | 3 days of ageing | 8 days of ageing |
|---|---|---|---|
| Carbonyl index | < 0.01 | 0.05 | 0.19 |
| ductility, | ductile | brittle | Very brittle, decomposes |

It is clearly demonstrated that use of prodegradants according to the invention allows preparation of polypropylene products with a very short lifetime at temperatures around 80 °C.

### Example 9. Preparation of film samples by foil blowing

Mixtures of PP homopolymers ((HE125MO, Borealis AS), LLDPsE (FG5190, Borealis AS) and fat-soluble iron product from experiment 1a-) (as masterbatch 10 % in HE125MO) were compounded in a double helical extruder and granulated. Film was blown from the granulate by a labour film blowing machine. No antioxidant was added to the compounds except what was included in the HB125MO and FG5190 (small amounts phenol/ phosphite composition, typically 200 ppm hindered phenol and 600 ppm phosphite). The titanium dioxide masterbatch was provided by Kunststoff teknikk Norge AS and comprised 60 % titanium dioxide (rutile) and 40 % PP homopolymer. The foils had a thickness of 30-40 µm. Table 13a shows the film qualities made

**Table 13a**

| Foil No. | iron compound | PP | LLDPE | other additive (MB) |
|---|---|---|---|---|
| FG-1H | 5 % | 82 % | 10 % | 3% titanium dioxide |
| FG-1 | 5 % | 85 % | 10 % | --- |
| FG-2 | 5 % | 75 % | 20 % | --- |
| FG-3 | 5 % | 55 % | 40 % | --- |
| FG-4 | 5 % | 35 % | 60 % | --- |
| FG-5 | 5 % | 15 % | 80 % | --- |

a) In a similar manner foils were made with a thickness of 30-40 µm by dry blending master batch of fat-soluble iron compound (10 % iron compound from experiment 1a) in HE125MO), PP-homopolymer (HE125MO), LLDPE (FG5190) and masterbatch other additive directly into the film blowing machine. The masterbatches Irgafos XP 60 - 1™ to Irgafos XP 60 - 4™ comprise 8%, 6%, 4 %, and 2 % Irgafos XP 60 in FG5190. All other masterbatches comprised 5 % of additives. In the masterbatch comprising the peroxide Perkadox BC, FG5190 granulate was impregnated with a solution of Perkadox BC. This masterbatch was not compounded.

**Table 13b**

| Foil No. | iron compound (MB) | PP | LLDPE | other additive (MB) | supplier of other additive |
|---|---|---|---|---|---|
| 40416-01 | 1 % | 49% | 50 % | --- | --- |
| 40416-02 | 3 % | 47% | 50 % | --- | --- |
| 40416-03 | 5 % | 45% | 50 % | --- | --- |
| 40416-04 | 10 % | 40 % | 50 % | --- | --- |
| 40416-05 | 5 % | 45% | 45% | 5% Tinuvin 770 | Ciba Special. Chem |
| 40416-06 | 8 % | 42 % | 42% | 8% Irgafos XP 60 - | Ciba Special. Chem |
| 40416-07 | 6 % | 44% | 44 % | 6% Irgafos XP 60 - | Ciba Special. Chem |
| 40416-08 | 4 % | 46 % | 46 % | 4% Irgafos XP 60 - | Ciba Special. Chem |
| 40416-09 | 2 % | 48 % | 48 % | 2% Irgafos XP Ciba | 60 -4Special. Chem |
| 40416-10 | 5 % | 45 % | 45 % | 5% Sanduvor PR-25 | Clariant |
| 40416-11 | 5 % | 45 % | 45 % | 5% Cyasorb UV-541 Cytec | Industries |
| 40416-12 | 5 % | 45 % | 45 % | 5% Chimasorb 81 | Ciba Special. Chem |
| 40416-13 | 5 % | 45 % | 45% | 5% Tinuvin 1577 | Ciba Special. Chem |
| 40416-14 | 5 % | 45 % | 45 % | 5% stearylamin | Aldrich Chemicals |
| 40416-15 | 5 % | 45 % | 45 % | 5% Armostat 300 | AkzoNobel |
| 40416-16 | 1 % | 49 % | 49 % | 1% Perkadox BC | AkzoNobel |
| 40416-17 | 5 % | 45 % | 45 % | 5% Chimasorb 944 | Ciba Special. Chem |
| 40416-18 | 5 % | 45 % | 45 % | 5% Irganox B 921 | Ciba Special. Chem |
| 40416-19 | 5 % | 45 % | 45 % | 5% Tinuvin 783 | Ciba Special. Chem |

| | |
|---|---|
| Tinuvin 770 | s. Formula 6 |
| Irgafos XP 60 | 1:2 mixture of lactone 2 [181314-48-7] and phosphite [26741-53-7] |
| Sanduvor PR-25 | s. Formula 5 |
| Cyasorb UV-5411 | s. Formula 5 |
| Chimasorb 81 | s. Formula 5 |
| Tinuvin 1577 | s. Formula 5 |
| stearylamine | 1-aminooktadekane |
| Armostat 300 | ethoxylated alkylamine (alkyl = C₁₆ - C₁₈) |
| Perkadox BC | Dicumyl peroxide |
| Chimasorb 944 | s. Formula 6 |
| Irganox B921 | 1:2 mixture of hindered phenol [2082-79-3] and phosphite [31570-04-4] |
| Tinuvin 783 | 1:1 mixture of Chimasorb 944 and Tinuvin 622 (s. Formula 6) |

| | |
|---|---|
| CAS No. in []-brackets | |

### Characterizing and testing

### a) Accelerated ageing of foils

The film samples from experiment 9 were subjected to accelerated ageing according to ISO 4892-3. The test instrument was an Atlas UVCON weather-o-meter (Atlas Inc, USA) equipped with UVA 340 fluorescent lamps. The test cycles comprised 4 hours of UV radiation at dry heating to 60 °C, 30 minutes of water spraying at 10-12 °C and 3 hours and 30 minutes of condensation at 40 °C.

The course of degradation was characterized by assessment of the ductility and the condition of the foil with a simple test. A screwdriver weighing 87.0 grams and a rectangular pointed end with a 6.5 mm width and a 1 mm depth was dropped from 10 cm above the film samples being constrained in adapted standard sample holders belonging to the Atlas UVCON weather-o-meter (Atlas Inc, USA). The adaptation consisted in 3 mm thick polyethylene plates ensuring that the foil did not stick to the metal plate of the sample holder. The ductility and condition of the samples were assessed with the following grades:
1. the film sample is decomposing, pieces are missing
2. the film sample shows visible cracks before drop test
3. the film sample shows cracks in more than 3 out of 10 drop tests
4. the film sample shows cracks in less than 3 out of 10 drop tests
5. the film sample shows no signs of cracks after 10 drop tests.

Film samples that receive grade 1 or 2 have one or more of the properties useful in the present invention to define a plastic material that is degraded, i.e. the lifetime is over. The useful lifetime of a film sample is the period in which grade 5 is satisfied. Te useful lifetime is certainly over when grade 3 is reached.

The results are shown in table 14 a-b and table 15 a-d.

**table 14a**

| Foil No. | acc. ageing for 0 hours | acc. ageing for 18 hours | acc. ageing for 40 hours | acc. ageing for 67 hours | acc, ageing for 93 hours | acc. ageing for 119hours | acc. ageing for 185 hours |
|---|---|---|---|---|---|---|---|
| 40416-01 | 5 | 5 | 5 | 5 | 4 | 3 | 2 |
| 40416-02 | 5 | 5 | 5 | 4 | 3 | 2 | 1 |
| 40416-03 | 5 | 5 | 5 | 4 | 3 | 1 | 1 |
| 40416-04 | 5 | 5 | 5 | 2 | 1 | 1 | 1 |
| 40416-06 | 5 | 5 | 5 | 2 | 1 | 1 | 1 |
| 40416-07 | 5 | 5 | 5 | 4 | 3 | 2 | 1 |
| 40416-08 | 5 | 5 | 5 | 4 | 4 | 3 | 2 |
| 40416-09 | 5 | 5 | 5 | 5 | 5 | 4 | 2 |
| 40416-14 | 5 | 5 | 5 | 4 | 4 | 3 | 1 |
| 40416-15 | 5 | 5 | 5 | 4 | 3 | 2 | 1 |
| 40416-16 | 5 | 5 | 5 | 5 | 5 | 5 | 3 |
| 40416-18 | 5 | 5 | 5 | 5 | 4 | 3 | 2 |

**tabell 14b**

| Folie nr. | acc. ageing for 0 hours | acc. ageing for 18 hours | acc. ageing for 40 hours | acc. ageing for 67 hours | acc. ageing for 93 hours | acc. ageing for 119hours | acc. ageing for 185 hours |
|---|---|---|---|---|---|---|---|
| FG-1H | 5 | 4 | 3 | 2 | 1 | 1 | - - - |
| FG-1 | 5 | 3 | 2 | 1 | - - - | - - - | - - - |
| FG-2 | 5 | 4 | 2 | 1 | - - - | - - - | - - - |
| FG-3 | 5 | 5 | 5 | 3 | 2 | 1 | 1 |
| FG-4 | 5 | 5 | 5 | 4 | 3 | 2 | 1 |
| FG-5 | 5 | 5 | 5 | 5 | 4 | 3 | 2 |

**tabell 15a**

| Foil No. | Acc. Ageing f 0 hours | Acc. Ageing f 67 hours | Acc. Ageing f 85 hours | Acc. Ageing f 107 hours | Acc. Ageing f 134 hours | Acc. Ageing f 160 hours |
|---|---|---|---|---|---|---|
| 40416-05 | 5 | 5 | 5 | 5 | 5 | 5 |
| 40416-10 | 5 | 5 | 4 | 2 | 1 | 1 |
| 40416-11 | 5 | 5 | 4 | 3 | 2 | 1 |
| 40416-12 | 5 | 5 | 4 | 3 | 2 | 1 |
| 40416-13 | 5 | 5 | 5 | 4 | 4 | 3 |
| 40416-17 | 5 | 5 | 5 | 5 | 5 | 5 |
| 40416-19 | 5 | 5 | 5 | 5 | 5 | 5 |

**tabell 15b**

| | acc. ageing | acc. ageing | acc. ageing | acc. ageing | acc. ageing | acc. ageing |
|---|---|---|---|---|---|---|
| | 205 hours | 275 hours | 298 hours | 324 hours | 344 hours | 389 hours |
| 40416-05 | 5 | 4 | 4 | 4 | 4 | 3 |
| 40416-10 | | | | | | |
| 40416-11 | 1 | 1 | | | | |
| 40416-12 | 1 | 1 | | | | |
| 40416-13 | 2 | 1 | | | | |
| 40416-17 | 5 | 5 | 5 | 5 | 5 | 5 |
| 40416-19 | 5 | 5 | 5 | 5 | 5 | 5 |

**tabell 15c**

| | acc. ageing | acc. ageing | acc. ageing | acc. ageing | acc. ageing | acc. ageing |
|---|---|---|---|---|---|---|
| | 413 hours | 435 hours | 605 hours | 772 hours | 940 hours | 1064 hours |
| 40416-05 | 2 | 2 | 1 | | | |
| 40416-10 | | | | | | |
| 40416-11 | | | | | | |
| 40416-12 | | | | | | |
| 40416-13 | | | | | | |
| 40416-17 | 5 | 5 | 5 | 5 | 5 | 5 |
| 40416-19 | 5 | 5 | 5 | 5 | 5 | 5 |

**tabell 15d**

| | acc. ageing | acc. ageing | acc. ageing | | | |
|---|---|---|---|---|---|---|
| | 1324 hours | 1540 hours | 2030 hours | | | |
| 40416-05 | | | | | | |
| 40416-10 | | | | | | |
| 40416-11 | | | | | | |
| 40416-12 | | | | | | |
| 40416-13 | | | | | | |
| 40416-17 | 3 | 1 | | | | |
| 40416-19 | 5 | 5 | 1 | | | |

It is clearly demonstrated that the useful lifetime and lifetime of the thermoplastic materials subjected to accelerated ageing according to ISO 4892-2 is highly adjustable through the variation of fat-soluble iron compound, type and amount of other additive and the composition of the thermoplastic material. Useful lifetime and lifetime of thermoplastic materials subjected to natural ageing will be correspondingly adjustable.

### b) Accelerated ageing of film samples from Example 7 in convection oven with air circulation

Several film samples from experiment 9 were subjected to accelerated ageing in a convection oven with air circulation at 120 °C. The course of degradation was characterized by assessment of the ductility and condition of the foil with the simple test described under a) above. The results are shown in table 16 and table 17.

**table 16**

| Foil No. | acc. ageing for 0 hours | acc. ageing for 14 hours | acc. ageing for 37 hours | acc. ageing for 67 hours |
|---|---|---|---|---|
| 40416-01 | 5 | 5 | 5 | 3 |
| 40416-02 | 5 | 5 | 4 | 3 |
| 40416-03 | 5 | 5 | 4 | 4 |
| 40416-04 | 5 | 2 | 1 | --- |
| 40416-05 | 5 | 5 | 4 | 3 |
| 40416-06 | 5 | 5 | 3 | 2 |
| 40416-07 | 5 | 5 | 4 | 4 |
| 40416-08 | 5 | 5 | 4 | 4 |
| 40416-09 | 5 | 5 | 4 | 4 |
| 40416-14 | 5 | 2 | 1 | --- |
| 40416-15 | 5 | 5 | 4 | 3 |
| 40416-16 | 5 | 5 | 5 | 5 |
| 40416-17 | 5 | 5 | 5 | 5 |
| 40416-18 | 5 | 5 | 5 | 4 |
| 40416-19 | 5 | 5 | 5 | 5 |
| | | | | |

**table 17**

| Foil No. | acc. ageing for 0 hours | acc. ageing for 14 hours | acc. ageing for 37 hours | acc. ageing for 67 hours |
|---|---|---|---|---|
| FG-1H | 5 | 2 | 1 | --- |
| FG-1 | 5 | 2 | 1 | --- |
| FG-2 | 5 | 5 | 3 | 3 |
| FG-3 | 5 | 5 | 4 | 3 |
| FG-4 | 5 | 5 | 4 | 3 |
| FG-5 | 5 | 5 | 4 | 4 |

It is clearly demonstrated that the useful lifetime and the lifetime of the thermoplastic materials subjected to accelerated ageing in a convection oven with air circulation is highly adjustable thorough variation of the amount fat-soluble iron compound, type and amount of other additive added as well as the composition of the thermoplastic material. The useful lifetime and lifetime of the thermoplastic materials subjected to ageing under natural condition will be correspondingly adjustable.

A particular advantage of the present invention is that the processibility of thermoplastic materials can be improved such that e.g. PP qualities that normally do not allow foil blowing after addition f the prodegradant according to the present invention may be foil blown.

## Claims

1. Method for the manufacture of thermoplastic materials with good processibility and adjustable lifetime of products based on such thermoplastic:, which comprise at least one oxidizing promoting agent hereinafter referred to as prodegradant and at least one oxidizing inhibiting agent hereinafter referred to as stabilizer, **characterized in that** the prodegradant is a fat-soluble metal compound manufacturable by allowing a metal salt to react with a fat-soluble organic compound in a process in which a suitable oxidizing agent is used, the end product having an oxidizing ability with respect to a certain reduction agent that is higher than the oxidizing ability of a reference product manufactured from the same metal salt and the same fat soluble organic compound without the use of such an oxidizing agent, while using a stabilizer or combination of stabilizers with suitable process stability and long-term stability in presence of the prodegradant, wherein the fat-soluble organic compound is added in a stochiometric excess of a factor in the range of 1.2-100 in relation to the metal salt.

2. Method as claimed in claim 1, **characterized in that** said oxidizing agent comprises hydrogen peroxide and may comprise a 0.1 - 5 % aqueous hydrogen peroxide solution.

3. Method as claimed in claim 1, **characterized in that** said oxidizing agent comprises organic peroxides and hydro peroxides.

4. Method as claimed in claim 1, **characterized in that** said oxidizing agent comprises air or oxygen enriched air.

5. Method as claimed in any one of the claims 1-4, **characterized in that** said metal salt is a chloride.

6. Method as claimed in any one of the claims 1-5, **characterized in that** said fat-soluble organic compound is chosen among C₈- C₂₄ saturated or unsaturated fatty acids or fatty acid derivatives.

7. Method as claimed in claim 1, **characterized in that** said fat-soluble organic compound is added in a stoichiometric excess of a factor 3.

8. Method as claimed in claim 1, **characterized in that** said fat-soluble organic compound and said metal salt are identical compounds.

9. Method as claimed in any one of the claims 1-8, **characterized in that** a volatile compound is formed during the manufacture of the prodegradant.

10. Method as claimed in claim 1, **characterized in that** said metal salt is fat-saluble.

11. Method as claimed in claim **characterized in that** the anionic part of said metal salt completely or partially is comprised by anions that can be manufactured by removing a proton from a fat-soluble organic compound.

12. Method as claimed in any one of the preceding claims 1-11, **characterized in that** the prodegradant is washed with an aqueous solution of hydrogen peroxide to remove any remains of unreacted metal salt, dispersed in an aqueous, diluted solution of hydrogen peroxide at 55- 70 °C in 1 to 3 hours and dried.

13. Method as claimed in any one of the claims 1-12, **characterized in that** the oxidizing ability of the prodegradant increases with storage, heat treatment, treatment with oxygen containing or oxidizing compounds, or a combination thereof.

14. Method as claimed in any one of the preceding claims, **characterized in that** the metal in the metal salt is chosen among Sc, Ti, V, Cr, Mn, Fe, Co, Ni, Cu, Ga, Ge, As, Y, Zr, Nb, Mo, Ru, Rh, Pd, Ag, Cd, Hg, Sn, Sb, La, Ce, Pr, Nd, Sm, Eu, Gd, Tb, Dry, Ho, Er, Tm, Yb, Lu, Hf, Ta, W, Re, Os, Ir, Pt, Au, Pb, and Bi.

15. Method as claimed in any one of the preceding.claims, **characterized in that** the metal salt is an iron salt,

16. Method as claimed in claim 1, **characterized in that** the prodegradant is manufactured from ferric chloride as the metal salt, stearic acid as the organic compound and hydrogen peroxide as oxidizing agent.

17. Method as claimed in claim 1, **characterized in that** the prodegradant comprises remains of metal salt that has not or only partially reacted with the fat-soluble organic compound and that the anion of the metal salt wholly or partially is substituted by OH⁻ or OOH⁻.

18. Method as claimed in claim 1 for products based on a typical polypropylene quality, polyethylene quality or mixtures thereof, **characterized in that** the process stabilizer is comprised by a typical process stabilizer composition with 200 ppm phenolic antioxidant and 600 ppm organic phosphite, suitable for the manufacture of products with a lifetime in the range 3 -12 days according to ISO 4892-3 (60 °C/ 40 °C),

19. Method as claimed in claims 1, **characterized in that** the stabilizer is 3-xylyl-5,7-di-tert-buyl-5 benzofuranone, suitable for the manufacture of products with a lifetime in the range 1 - 4 days according to ISO 4892-3 (60 °C/ 40 °C).

20. Method as claimed in claim 1, **characterized in that** an aliphatic amine is used in conjunction with the prodegradant to obtain thermoplastic materials with a lifetime in the range 4-16 days in a 10 convection oven at 80 °C.

21. Method as claimed in claim 1, **characterized in that** the stabilizer mainly is comprised by a UV absorber when products with a lifetime in the range 5-12 days according to ISO 4892-3 (60 °C/ 40 °C) are to be manufactured.

22. Method as claimed in claim 21, **characterized in that** said UV absorber is chosen among Sanduvor PR25™, Chimassorb 81™, Cyasorb UV 5911™, Tinuvin 326™, and Tinuvin 1577™_{,}

23. Method as claimed in claim 1, **characterized in that** the stabilizer mainly is comprised by one phenolic antioxidant when products with a lifetime in the range 4 -13 days according to ISO 4892-3 (60 °C/ 40 °C) are to be manufactured.

24. Method as claimed in claim 1, **characterized in that** the stabilizer is comprised by one or more hindered amines with low molecular weights when products with a lifetime in the range 15 - 25 days according to ISO 4892-3 (60 °C/ 40 °C) are to be manufactured.

25. Method as claimed in claim 1, **characterized in that** the stabilizer is comprised by one or more hindered amines with high molecular weights when products with a lifetime in the range 30 - 70 days according to ISO 4892-3 (60 °C/ 40 °C) are to be manufactured.

26. Method as claimed in claim 1, **characterized in that** the stabilizer is comprised by any combination of the stabilizers mentioned in claims 20-25 when products with a lifetime in the range 1 - 100 days according to ISO 4892-3 (60 °C/ 40 °C) are to be manufactured.

27. Method as claimed in claim 1, **characterized in that** the stabilizer is comprised by 3-xylyl-5,7-di-tert-butyl-benzofuranone, suitable for the manufacture of products with a lifetime in the range 1 4 days in a convection oven at 80 °C in the absence of UV light.

28. Method as claimed in claim 1, **characterized in that** the stabilizer is comprised by 3-xylyl-5,7-di-tert-butyl-benzofuranone for the manufacture of products, to provide a processibility of the thermoplastic material at temperatures up to 300 °C that is equally good as or better than the processibility of a similar thermoplastic materials without said prodegradant.

29. Method as claimed in claim 1 for products based on a typical polypropylene homopolymer, block copolymer or random copolymer, **characterized in that** the process stabilizer is comprised by from 50 ppm to 200 ppm hindered phenol.

30. Method as claimed in any one of the preceding claims, **characterized in that** the stabilizer is comprised by or comprises at least one component chosen among phosphites, thiosynergists, hindered phenols, hydroquinone compounds, C-H acid radical scavengers, hydroxylamines, hindered amines, and UV absorbers.

31. Method as claimed in any one of the preceding claims, **characterized in that** the prodegradant and the stabilizers are added to the thermoplastic material in the form of one or more masterbatches.

32. Method as claimed in any one of the preceding claims, **characterized in that** the thermoplastic material is chosen among any thermoplastic material or combination of thermoplastic materials that alone or in combination has processibility allowing manufacture of products by extrusion, film blowing, blow moulding, thermoforming, rotational moulding, or injection moulding, particularly any workable quality of PE, PP and combinations thereof.

33. Mixture of additives for thermoplastic materials comprising at least one oxidizing promoting agent (prodegradant) and at least one degradation inhibiting agent (stabilizer), **characterized in that** the prodegradant has the form of a fat-soluble metal compound manufacturable by allowing a metal salt to react with a fat-soluble organic compound in a process in which a suitable oxidizing agent is used, the end product having an oxidizing ability with respect to a certain reduction agent that is higher than the oxidizing ability of a reference product manufactured from the same metal salt and the same fat soluble organic compound without the use of such an oxidizing agent, while using a stabilizer or combination of stabilizers with suitable process stability and long-term stability in presence of the prodegradant, where the fat-soluble organic compound is added in a stoichiometric excess of a factor in the range of 1.2 - 100 in relation to the metal salt.

34. Mixture as claimed in claim 33, **characterized in that** the prodegradant is manufactured from ferric chloride as the metal salt, stearic acid as the organic compound and hydro peroxide as the oxidizing agent.

35. Mixture as claimed in claim 33 or claim 34 for products based on a typical polypropylene homopolymer, **characterized in that** the process stabilizer is comprised by a typical process stabilizer composition with 200 ppm phenolic antioxidant and 600 ppm organic phosphite, suitable for the manufacture of products with a lifetime in the range 1-12 days according to ISO 4892-3 (60 °C/ 40 °C).

36. Mixture as claimed in claim 33 or claim 34, **characterized in that** the stabilizer is 3-xylyl-5,7-di-tert-butyl-benzofuranone, suitable for the manufacture of products with a lifetime in the range 1-4 days according to ISO 4892-3 (60 °C/ 40 °C).

37. Mixture as claimed in claim 33 or claim 34, **characterized in that** the stabilizer mainly is comprised by a UV absorber when products with a lifetime in the rage 5-12 days according to ISO 4892-3 (60 °C/ 40 °C) are to be manufactured.

38. Mixture as claimed in claim 37, **characterized in that** said UV absorber is chosen among Sanduvor PR25™, Chimassorb 81™, Cyasorb UV 5911™, Tinuvin 326™, and Tinuvin 1577™.

39. Mixture as claimed in claim 33 claim 34, **characterized in that** the stabilizer mainly is comprised by one phenolic antioxidant when products with a lifetime in the range 4 - 13 days according to ISO 4892-3 (60 °C/40°C) are to be manufactured.

40. Mixture as claimed in claim 33 or claim 34, **characterized in that** the stabilizer is comprised by one or more hindered amines with low molecular weights when products with a lifetime in the range 15 - 25 days according to ISO 4892-3 (60 °C/ 40 °C) are to be manufactured.

41. Mixture as claimed in claim 33 or claim 34, **characterized in that** the stabilizer is comprised by one or more hindered amines with high molecular weights when products with a lifetime in the range 30 - 70 days accordingto ISO 4892-3 (60 °C/40 °C) are to be manufactured.

42. Mixture as claimed in claim 35 or claim 34 for products based on a typical polypropylene homopolymer, block copolymer or random copolymer, **characterized in that** the process stabilizer is comprised by from 50 ppm to 200 ppm hindered phenol.

43. Mixture as claimed in any one of claims 34 - 42, **characterized in that** the mixture has the form of one or more concentrates or one or more masterbatches.

44. Thermoplastic material, **characterized by** being manufactured according to any one of claims 1-32 or with any one of the mixtures according to claims 33-43.

45. Product of a thermoplastic material according to claim 44, **characterized in** being processed by film blowing or foil extrusion with film or foil as the end product or intermediate product, hereunder bis-oriented film.

46. Product as claimed in claim 45, **characterized in** being chosen among plastic bags, sunlight collector foil, other types of foil useable for agricultural purposes, foodstuff packaging, other packaging, or other types of bags or sacks.

47. Product of a thermoplastic material according to claim 44, **characterized in that** it is processed by injection moulding to injection moulded end or intermediate products.

48. Product as claimed in claim 47, **characterized in that** it is chosen among foodstuff packaging, other packaging, disposable articles for domestic use or industrial use or use with foodstuff and/ or beverage.

49. Product of a thermoplastic material according to claim 44, **characterized in that** it is processed by thermoforming to thermoformed end or intermediate products.

50. Product as claimed in claim 49, **characterized in that** it is chosen among foodstuff packaging, other packaging, disposable articles for domestic or industrial use or for use with foodstuff and/or beverage.

51. Product of a thermoplastic material according to claim 44, **characterized in that** is processed by extrusion to extruded end or intermediate products.

52. Product as claimed in claim 51, **characterized in that** it is chosen among products for industrial purposes, construction purposes, hereunder transportation, building constructions, fiber-shaped products, ribbon-shaped products, hereunder woven and non-woven products.

53. Product of a thermoplastic material according to claim 44, **characterized in that** it is processed by blow moulding to blow moulded end or intermediate products.

54. Product as claimed in claim 53, **characterized in that** it is chosen among foodstuff packaging, other packaging, disposable articles for domestic or industrial use or for use with foodstuff and/ or beverage.

## Patentansprüche

1. Verfahren zur Herstellung von thermoplastischen Materialien mit guter Verarbeitbarkeit und einstellbarer Lebensdauer von Produkten, die auf diesen Thermopasten basieren, welche mindestens ein Oxidationsfördermittel, nachstehend als Prodegradant bezeichnet, und mindestens ein Oxidationshemmungsmittel, nachstehend als Stabilisator bezeichnet, umfassen, **dadurch gekennzeichnet, dass** das Prodegradant eine fettlösliche Metallverbindung ist, herstellbar durch Zulassen einer Reaktion eines Metallsalzes mit einer fettlöslichen organischen Verbindung in einem Prozess, bei dem ein geeignetes Oxidationsmittel verwendet wird, das Endprodukt ein Oxidationsvermögen mit Bezug auf ein bestimmtes Reduktionsmittel besitzt, welches größer ist als das Oxidationsvermögen eines Referenzprodukts, das aus dem gleichen Metallsalz und der gleichen fettlöslichen organischen Verbindung ohne den Gebrauch eines solchen Oxidationsmittels hergestellt wird, während ein Stabilisator oder eine Kombination von Stabilisatoren mit geeigneter Prozessbeständigkeit und Dauerbeständigkeit in Gegenwart des Prodegradants benutzt wird, wobei die fettlösliche organische Verbindung in einem stöchiometrischen Überschuss mit einem Faktor im Bereich von 1,2-100 bezüglich des Metallsalzes hinzugefügt wird.

2. Verfahren nach Anspruch 1, **dadurch gekennzeichnet, dass** das Oxidationsmittel Wasserstoffperoxid umfasst und eine 0,1-5 %ige wässrige Wasserstoffperoxidlösung umfassen kann.

3. Verfahren nach Anspruch 1, **dadurch gekennzeichnet, dass** das Oxidationsmittel organische Peroxide und Hydroperoxide umfasst.

4. Verfahren nach Anspruch 1, **dadurch gekennzeichnet, dass** das Oxidationsmittel Luft oder mit Sauerstoff angereicherte Luft umfasst.

5. Verfahren nach einem der Ansprüche 1 bis 4, **dadurch gekennzeichnet, dass** das Metallsalz ein Chlorid ist.

6. Verfahren nach einem der Ansprüche 1 bis 5, **dadurch gekennzeichnet, dass** die fettlösliche organische Verbindung ausgewählt ist aus gesättigten oder ungesättigten C₈ - C₂₄ Fettsäuren oder Fettsäurederivaten.

7. Verfahren nach Anspruch 1, **dadurch gekennzeichnet, dass** die fettlösliche organische Verbindung in einem stöchiometrischen Überschuss in einem Faktor 3 hinzugefügt wird.

8. Verfahren nach Anspruch 1, **dadurch gekennzeichnet, dass** die fettlösliche organische Verbindung und das Metallsalz identische Verbindungen sind.

9. Verfahren nach einem der Ansprüche 1 bis 8, **dadurch gekennzeichnet, dass** eine flüchtige Verbindung während der Herstellung des Prodegradants gebildet wird.

10. Verfahren nach Anspruch 1, **dadurch gekennzeichnet, dass** das Metallsalz fettlöslich ist.

11. Verfahren nach Anspruch 1, **dadurch gekennzeichnet, dass** der anionische Teil des Metallsalzes vollständig oder teilweise aus Anionen besteht, welche durch Entfernen eines Protons von einer fettlöslichen organischen Verbindung hergestellt werden können.

12. Verfahren nach einem der Ansprüche 1 bis 11, **dadurch gekennzeichnet, dass** das Prodegradant mit einer wässrigen Lösung von Wasserstoffperoxid zur Beseitigung jeglicher Reste von nicht reagiertem Metallsalz gewaschen, in einer wässrigen, verdünnten Lösung von Wasserstoffperoxid bei 55-70 °C über 1 bis 3 Stunden dispergiert und getrocknet wird.

13. Verfahren nach einem der Ansprüche 1 bis 12, **dadurch gekennzeichnet, dass** das Oxidationsvermögen des Prodegradants bei Lagerung, Wärmebehandlung, Behandlung mit Sauerstoff enthaltenden oder oxidierenden Verbindungen oder einer Kombination von diesen größer wird.

14. Verfahren nach einem der vorherigen Ansprüche, **dadurch gekennzeichnet, dass** das Metall in dem Metallsalz ausgewählt ist aus Sc, Ti, V, Cr, Mn, Fe, Co, Ni, Cu, Ga, Ge, As, Y, Zr, Nb, Mo, Ru, Rh, Pd, Ag, Cd, Hg, Sn, Sb, La, Ce, Pr, Nd, Sm, Eu,Gd, Tb, Dy, Ho, Er, Tm, Yb, Lu, Hf, Ta, W, Re, Os, Ir, Pt, Au, Pb und Bi.

15. Verfahren nach einem der vorherigen Ansprüche, **dadurch gekennzeichnet, dass** das Metallsalz ein Eisensalz ist.

16. Verfahren nach Anspruch 1, **dadurch gekennzeichnet, dass** das Prodegradant aus Eisenchlorid als das Metallsalz, Stearinsäure als die organische Verbindung und Wasserstoffperoxid als Oxidationsmittel hergestellt wird.

17. Verfahren nach Anspruch 1, **dadurch gekennzeichnet, dass** das Prodegradant Reste von Metallsalz umfasst, welche nicht oder nur teilweise mit der fettlöslichen organischen Verbindung reagiert haben, und dass das Anion des Metallsalzes vollständig oder teilweise durch OH oder OOH substituiert ist.

18. Verfahren nach Anspruch 1 für Produkte, welche auf eine typische Polypropylenqualität, Polyethylenqualität oder eine Mischung von diesen basieren, **dadurch gekennzeichnet, dass** das der Prozess-Stabilisator eine typischen Prozess-Stabilisatorzusammensetzung mit 200 ppm phenolisches Antioxidationsmittel und 600 ppm organisches Phosphit umfasst, geeignet zur Herstellung von Produkten mit einer Lebensdauer in dem Bereich von 3-12 Tagen nach ISO 4892-3 (60 °C / 40 °C).

19. Verfahren nach Anspruch 1, **dadurch gekennzeichnet, dass** der Stabilisator 3-Xylyl-5,7-Di-Tert-Butylbenzofuranon ist, geeignet zur Herstellung von Produkten mit einer Lebensdauer in dem Bereich von 3-4 Tagen nach ISO 4892-3 (60 °C / 40 °C).

20. Verfahren nach Anspruch 1, **dadurch gekennzeichnet, dass** ein aliphatisches Amin zusammen mit dem Prodegradant benutzt wird, um thermoplastische Materialien mit einer Lebensdauer in dem Bereich von 4-16 Tagen in einem Konvektionsofen bei 80 °C zu erhalten.

21. Verfahren nach Anspruch 1, **dadurch gekennzeichnet, dass** der Stabilisator im Wesentlichen aus einem UV-Absorber besteht, wenn Produkte mit einer Lebensdauer in dem Bereich von 5-12 Tagen nach ISO 4892-3 (60 °C / 40 °C) hergestellt werden.

22. Verfahren nach Anspruch 1, **dadurch gekennzeichnet, dass** der UV-Absorber ausgewählt ist aus Sanduvor PR 25^{™}, Chimassorb 81^{™}, Cyasorb UV 5911^{™}, Tinuvin 326^{™} und Tinuvin 1577^{™}.

23. Verfahren nach Anspruch 1, **dadurch gekennzeichnet, dass** der Stabilisator im Wesentlichen aus einem phenolischen Antioxidationsmittel besteht, wenn Produkte mit einer Lebensdauer in dem Bereich von 4-13 Tagen nach ISO 4892-3 (60 °C / 40 °C) hergestellt werden.

24. Verfahren nach Anspruch 1, **dadurch gekennzeichnet, dass** der Stabilisator aus einem oder mehreren gehinderten Aminen mit niedrigen Molekulargewichten besteht, wenn Produkte mit einer Lebensdauer in dem Bereich von 15-25 Tagen nach ISO 4892-3 (60 °C / 40 °C) hergestellt werden.

25. Verfahren nach Anspruch 1, **dadurch gekennzeichnet, dass** der Stabilisator aus einem oder mehreren gehinderten Aminen mit hohen Molekulargewichten besteht, wenn Produkte mit einer Lebensdauer in dem Bereich von 30-70 Tagen nach ISO 4892-3 (60 °C / 40 °C) hergestellt werden.

26. Verfahren nach Anspruch 1, **dadurch gekennzeichnet, dass** der Stabilisator aus einer Kombination der in den Ansprüchen 20 bis 25 genannten Stabilisatoren besteht, wenn Produkte mit einer Lebensdauer in dem Bereich von 1-100 Tagen nach ISO 4892-3 (60 °C / 40 °C) hergestellt werden.

27. Verfahren nach Anspruch 1, **dadurch gekennzeichnet, dass** der Stabilisator aus 3-Xylyl-5,7-Di-Tert-Butylbenzofuranon besteht, geeignet zur Herstellung von Produkten mit einer Lebensdauer in dem Bereich von 1-4 Tagen in einem Konvektionsofen bei 80 °C in Abwesenheit von UV-Licht.

28. Verfahren nach Anspruch 1, **dadurch gekennzeichnet, dass** der Stabilisator aus 3-Xylyl-5,7-Di-Tert-Butylbenzofuranon zur Herstellung von Produkten besteht, um eine Verarbeitbarkeit des thermoplastischen Materials bei Temperaturen bis zu 300 °C zu bilden, welche gleich gut oder besser als die Verarbeitbarkeit eines entsprechenden thermoplastischen Materials ohne das Prodegradant ist.

29. Verfahren nach Anspruch 1 für Produkte, welche auf ein typisches Polypropylen-Homopolymer, Blockpolymer oder Random-Copolymer basieren, **dadurch gekennzeichnet, dass** der Prozess-Stabilisator aus 50 ppm bis 200 ppm gehindertem Phenol besteht.

30. Verfahren nach einem der vorherigen Ansprüche, **dadurch gekennzeichnet, dass** der Stabilisator aus einer Komponente besteht oder wenigstens eine Komponente enthält, welche ausgewählt ist aus Phosphiden, Thiokomplexbildner, gehinderte Phenole, Hydrochinonverbindungen, C-H-Säure-Radikalfänger, Hydroxylamine, gehinderte Amine und UV-Absorber.

31. Verfahren nach einem der vorherigen Ansprüche, **dadurch gekennzeichnet, dass** das Prodegradant und der Stabilisator zu dem thermoplastischen Material in Form von einer oder mehrerer Grundmischungen hinzugefügt werden.

32. Verfahren nach einem der vorherigen Ansprüche, **dadurch gekennzeichnet, dass** die thermoplastischen Materialien ausgewählt werden aus einem thermoplastischen Material oder einer Kombination von thermoplastischen Materialien, welche allein oder in Kombination eine Verarbeitbarkeit besitzen, welche eine Herstellung von Produkten durch Extrusion, Folienblasen, Blasformen, Thermoformen, Rotationsformen oder Spritzgießen zulassen, insbesondere jede verarbeitbare Qualität von PE, PP und Kombinationen von diesen.

33. Gemisch von Zusatzstoffen für thermoplastische Materialien, umfassend mindestens ein Oxidationsfördermittel (Prodegradant) und mindestens ein den Abbau hemmendes Mittel (Stabilisator), **dadurch gekennzeichnet, dass** das Prodegradant die Form einer fettlöslichen Metallverbindung hat, herstellbar durch Zulassen einer Reaktion eines Metallsalzes mit einer fettlöslichen organischen Verbindung in einem Prozess, bei dem ein geeignetes Oxidationsmittel verwendet wird, das Endprodukt ein Oxidationsvermögen mit Bezug auf ein bestimmtes Reduktionsmittel besitzt, welches größer ist als das Oxidationsvermögen eines Referenzprodukts, das aus dem gleichen Metallsalz und der gleichen fettlöslichen organischen Verbindung ohne den Gebrauch eines solchen Oxidationsmittels hergestellt wird, während ein Stabilisator oder eine Kombination von Stabilisatoren mit geeigneter Prozessbeständigkeit und Dauerbeständigkeit in Gegenwart des Prodegradants benutzt wird, wobei die fettlösliche organische Verbindung in einem stöchiometrischen Überschuss mit einem Faktor im Bereich von 1,2-100 bezüglich des Metallsalzes hinzugefügt wird.

34. Gemisch nach Anspruch 33, **dadurch gekennzeichnet, dass** das Prodegradant aus Eisenchlorid als das Metallsalz, Stearinsäure als die organische Verbindung und Wasserstoffperoxid als das Oxidationsmittel hergestellt ist.

35. Gemisch nach Anspruch 33 oder 34 für Produkte, welche auf ein typisches Polypropylen-Homopolymer basieren, **dadurch gekennzeichnet, dass** das der Prozess-Stabilisator aus einer typischen Prozess-Stabilisatorzusammensetzung mit 200 ppm phenolisches Antioxidationsmittel und 600 ppm organisches Phosphit besteht, geeignet zur Herstellung von Produkten mit einer Lebensdauer in dem Bereich von 1-12 Tagen nach ISO 4892-3 (60 °C / 40 °C).

36. Gemisch nach Anspruch 33 oder 34, **dadurch gekennzeichnet, dass** der Stabilisator 3-Xylyl-5,7-Di-Tert-Butylbenzofuranon ist, geeignet zur Herstellung von Produkten mit einer Lebensdauer in dem Bereich von 1-4 Tagen nach ISO 4892-3 (60 °C / 40 °C).

37. Gemisch nach Anspruch 33 oder 34, **dadurch gekennzeichnet, dass** der Stabilisator im Wesentlichen aus einem UV-Absorber besteht, wenn Produkte mit einer Lebensdauer in dem Bereich von 5-12 Tagen nach ISO 4892-3 (60 °C / 40 °C) hergestellt werden.

38. Gemisch nach Anspruch 37, **dadurch gekennzeichnet, dass** der UV-Absorber ausgewählt ist aus Sanduvor PR 25^{™}, Chimassorb 81^{™}, Cyasorb UV 5911^{™}, Tinuvin 326^{™} und Tinuvin 1577^{™}.

39. Gemisch nach Anspruch 33 oder 34, **dadurch gekennzeichnet, dass** der Stabilisator im Wesentlichen aus einem phenolischen Antioxidationsmittel besteht, wenn Produkte mit einer Lebensdauer in dem Bereich von 4-13 Tagen nach ISO 4892-3 (60 °C / 40 °C) hergestellt werden.

40. Gemisch nach Anspruch 33 oder 34, **dadurch gekennzeichnet, dass** der Stabilisator aus einem oder mehreren gehinderten Aminen mit niedrigen Molekulargewichten besteht, wenn Produkte mit einer Lebensdauer in dem Bereich von 15-25 Tagen nach ISO 4892-3 (60 °C / 40 °C) hergestellt werden.

41. Gemisch nach Anspruch 33 oder 34, **dadurch gekennzeichnet, dass** der Stabilisator aus einem oder mehreren gehinderten Aminen mit hohen Molekulargewichten besteht, wenn Produkte mit einer Lebensdauer in dem Bereich von 30-70 Tagen nach ISO 4892-3 (60 °C / 40 °C) hergestellt werden.

42. Gemisch nach Anspruch 33 oder 34 für Produkte, welche auf ein typisches Polypropylen-Homopolymer, Blockpolymer oder Random-Copolymer basieren, **dadurch gekennzeichnet, dass** der Prozess-Stabilisator aus 50 ppm bis 200 ppm gehindertem Phenol besteht.

43. Gemisch nach einem der Ansprüche 34 bis 42, **dadurch gekennzeichnet, dass** das Gemisch die Form von einem oder mehreren Konzentraten oder einem oder mehreren Grundmischungen hat.

44. Thermoplastisches Material, **dadurch gekennzeichnet, dass** es nach einem der Ansprüche 1-32 oder mit einem der Gemische nach einem der Ansprüche 33-43 hergestellt wird.

45. Produkt aus einem thermoplastischen Material nach Anspruch 44, **gekennzeichnet durch** eine Verarbeitung **durch** Folienblasen oder Folienextrusion zu einem Film oder einer Folie als Endprodukt oder Zwischenprodukt, hierunter bis-orientierter Film.

46. Produkt nach Anspruch 45, **dadurch gekennzeichnet, dass** das Produkt ausgewählt ist aus Plastiktüten, Sonnenlichtkollektorfolien, andere Arten von Folien, welche für landwirtschaftliche Zwecke nutzbar sind, Nahrungsmittelverpackungen, andere Verpackungen oder andere Arten von Tüten oder Säcken.

47. Produkt eines thermoplastischen Material nach Anspruch 44, **dadurch gekennzeichnet, dass** es durch Spritzgießen zu einem Spritzgussend- oder -zwischenprodukt verarbeitet ist.

48. Produkt nach Anspruch 47, **dadurch gekennzeichnet, dass** es ausgewählt ist aus Nahrungsmittelverpackungen, andere Verpackungen, Einwegartikel für den Haushalts- oder Industriegebrauch oder zum Gebrauch mit Nahrungsmitteln und/oder Getränken.

49. Produkt aus einem thermoplastischen Material nach Anspruch 44, **dadurch gekennzeichnet, dass** es durch Thermoformen zu einem thermogeformten End- oder Zwischenprodukt verarbeitet ist.

50. Produkt nach Anspruch 49, **dadurch gekennzeichnet, dass** es ausgewählt ist aus Nahrungsmittelverpackungen, andere Verpackungen, Einwegartikel für den Haushalts- oder Industriegebrauch oder zum Gebrauch mit Nahrungsmitteln und/oder Getränken.

51. Produkt aus einem thermoplastischen Material nach Anspruch 44, **dadurch gekennzeichnet, dass** es durch Extrusion zu einem extrudierten End- oder Zwischenprodukten verarbeitet ist.

52. Produkt nach Anspruch 51, **dadurch gekennzeichnet, dass** es ausgewählt ist aus Produkten für industrielle Zwecke, hierunter Beförderungsmittel, Konstruktionszwecke, Gebäudekonstruktionen, faserförmige Produkte, bandförmige Produkte, hierunter gewebte und nicht gewebte Produkte.

53. Produkt aus einem thermoplastischen Material nach Anspruch 44, **dadurch gekennzeichnet, dass** es durch Blasformen zu blasgeformten End- oder Zwischenprodukten verarbeitet ist.

54. Produkt nach Anspruch 53, **dadurch gekennzeichnet, dass** es ausgewählt ist aus Nahrungsmittelverpackungen, andere Verpackungen, Einwegartikel für den Haushalts- oder Industriegebrauch oder zum Gebrauch mit Nahrungsmitteln und/oder Getränken.

## Revendications

1. Procédé pour la fabrication de matériaux thermoplastiques, ayant une bonne aptitude à la mise en oeuvre et une durée de vie réglable des produits basés sur ces matériaux thermoplastiques, qui comprennent au moins un agent favorisant l'oxydation, ci-après dénommé pro-dégradant et au moins un agent inhibiteur d'oxydation ci-après dénommé stabilisateur, **caractérisé en ce que** le pro-dégradant est un composé métallique soluble dans la graisse, pouvant être fabriqué par réaction d'un sel métallique avec un composé organique soluble dans la graisse, dans un procédé dans lequel un agent oxydant adapté est utilisé, le produit final ayant une capacité d'oxydation relativement à un certain agent de réduction qui est supérieur à la capacité d'oxydation d'un produit de référence, fabriqué à partir du même sel métallique et du même composé organique soluble dans la graisse, sans utiliser un tel agent oxydant, tout en utilisant un stabilisateur ou une combinaison de stabilisateurs ayant une stabilité à la mise en oeuvre et une stabilité à long terme appropriées en présence du pro-dégradant, dans lequel le composé organique soluble dans la graisse est ajouté en un excès stoechiométrique par rapport au sel métallique compris entre 1,2 et 100 relativement.

2. Procédé selon la revendication 1, **caractérisé en ce que** ledit agent oxydant est un peroxyde d'hydrogène et peut être une solution aqueuse de peroxyde d'hydrogène à 0,1-5 %.

3. Procédé selon la revendication 1, **caractérisé en ce que** ledit agent oxydant comprend des peroxydes organiques et des hydro-peroxydes.

4. Procédé selon la revendication 1, **caractérisé en ce que** ledit agent oxydant comprend de l'air ou de l'air enrichi en oxygène.

5. Procédé selon l'une quelconque des revendications 1-4, **caractérisé en ce que** ledit sel métallique est un chlorure.

6. Procédé selon l'une quelconque des revendications 1-5, **caractérisé en ce que** ledit composé organique soluble dans la graisse est choisi parmi des acides gras saturés ou insaturés en C₈-C₂₄ ou les dérivés de ceux-ci.

7. Procédé selon la revendication 1, **caractérisé en ce que** ledit composé organique soluble dans la graisse est ajouté en un excès stoechiométrique de 3.

8. Procédé selon la revendication 1, **caractérisé en ce que** ledit composé organique soluble dans la graisse et ledit sel métallique sont des composés identiques.

9. Procédé selon l'une quelconque des revendications 1 à 8, **caractérisé en ce qu'**un composé volatil est formé pendant la fabrication de l'agent pro-dégradant.

10. Procédé selon la revendication 1, **caractérisé en ce que** ledit sel métallique est soluble dans la graisse.

11. Procédé selon la revendication 1, **caractérisé en ce que** la partie anionique dudit sel métallique est totalement ou partiellement comprise par des anions qui peuvent être fabriqués en enlevant un proton d'un composé organique soluble dans la graisse.

12. Procédé selon l'une quelconque des revendications précédentes 1-11, **caractérisé en ce que** l'agent pro-dégradant est lavé avec une solution aqueuse de peroxyde d'hydrogène, pour éliminer tous les résidus de sel de métal n'ayant pas réagi, dispersé dans une solution diluée aqueuse de peroxyde d'hydrogène à 55-70 °C en 1 à 3 heures, et séché.

13. Procédé selon l'une quelconque des revendications 1-12, **caractérisé en ce que** la capacité d'oxydation de l'agent pro-dégradant augmente avec le stockage, le traitement thermique, le traitement avec des composés oxydants ou contenant de l'oxygène, ou une combinaison de ceux-ci.

14. Procédé selon l'une quelconque des revendications précédentes, **caractérisé en ce que** le métal du sel métallique est choisi parmi Sc, Ti, V, Cr, Mn, Fe, Co, Ni, Cu, Ga, Ge, As, Y, Zr, Nb, Mo, Ru, Rh, Pd, Ag, Cd, Hg, Sn, Sb, La, Ce, Pr, Nd, Sm, Eu, Gd, Tb, Dy, Ho, Er, Tm, Yb, Lu, Hf, Ta, W, Re, Os, Ir, Pt, Au, Pb et Bi.

15. Procédé selon l'une quelconque des revendications précédentes, **caractérisé en ce que** le sel métallique est un sel de fer.

16. Procédé selon la revendication 1, **caractérisé en ce que** l'agent pro-dégradant est fabriqué à partir de chlorure ferrique sous forme de sel métallique, d'acide stéarique comme composé organique et de peroxyde d'hydrogène comme agent oxydant.

17. Procédé selon la revendication 1, **caractérisé en ce que** le pro-dégradant comprend des résidus de sel métallique n'ayant pas ou seulement partiellement réagi avec le composé organique soluble dans la graisse et que l'anion du sel métallique est totalement ou partiellement remplacé par OH ou OOH.

18. Procédé selon la revendication 1, pour des produits à base de polypropylène, de polyéthylène ou de mélanges de ceux-ci de qualité typique, **caractérisé en ce que** le stabilisateur de procédé est compris dans une composition de stabilisateur de procédé typique avec 200 ppm d'antioxydant phénolique et 600 ppm de phosphite organique, adapté pour la fabrication de produits ayant une durée de vie comprise entre 3 et 12 jours, selon la norme ISO 4892 3 (60 °C/40 °C).

19. Procédé selon la revendication 1, **caractérisé en ce que** le stabilisateur est la 3-xylyl-5,7-di-tert-butyl-benzofuranone, adaptée pour la fabrication de produits ayant une durée de vie comprise entre 1 et 4 jours, selon la norme ISO 4892-3 (60 °C/40 °C).

20. Procédé selon la revendication 1, **caractérisé en ce qu'**une amine aliphatique est utilisée en combinaison avec le pro-dégradant pour obtenir des matériaux thermoplastiques avec une durée de vie comprise entre 4-16 jours dans un four à convexion à 80 °C.

21. Procédé selon la revendication 1, **caractérisé en ce que** le stabilisateur est essentiellement formé par un absorbeur UV lorsque des produits ayant une durée de vie comprise entre 5 et 12 jours selon la norme ISO 1892-3 (60 °C/40 °C) doivent être fabriqués.

22. Procédé selon la revendication 21, **caractérisé en ce que** ledit absorbeur UV est choisi parmi le Sanduvor PR25™, le Ghimassorb 81™, le Cyasorb UV 5911™, le Tinuvin 326™, et le Tinuvin 1577™.

23. Procédé selon la revendication 1, **caractérisé en ce que** le stabilisateur est essentiellement formé par dans un antioxydant phénolique, lorsque des produits ayant une durée de vie comprise entre 4 et 13 jours selon la norme ISO 4892-3 (60 °C/40 °C) doivent être fabriqués.

24. Procédé selon la revendication 1, **caractérisé en ce que** le stabilisateur est formé par une ou plusieurs amines encombrées de faible masse moléculaire, lorsque des produits ayant une durée de vie comprise entre 15 et 25 jours selon la norme ISO 4892-3 (60 °C/40 °C) doivent être fabriqués.

25. Procédé selon la revendication 1, **caractérisé en ce que** le stabilisateur est formé par une ou plusieurs amines encombrées de masse moléculaire élevée lorsque des produits ayant une durée de vie comprise entre 30 et 70 jours selon la norme ISO 4892-3 (60 °C/40 °C) doivent être fabriqués.

26. Procédé selon la revendication 1, **caractérisé en ce que** le stabilisateur est n'importe quelle combinaison des stabilisateurs mentionnés dans les revendications 20-25, lorsque des produits ayant une durée de vie comprise entre 1 et 100 jours, selon la norme ISO 4892-3 (60 °C/40 °C), doivent être fabriqués.

27. Procédé selon la revendication 1, **caractérisé en ce que** le stabilisateur est la 3-xylyl-5,7-di-tert-butyl-benzofuranone, adapté pour la fabrication de produits avec une durée de vie comprise entre 1 et 4 jours, dans un four conventionnel à 30 °C en l'absence de lumière UV.

28. Procédé selon la revendication 1, **caractérisé en ce que** le stabilisateur est la 3-xylyl-5,7-di-tert-butyl-benzofuranone pour la fabrication de produits, afin de conférer au matériau thermoplastique une aptitude à la mise en oeuvre à des températures pouvant atteindre à 300 °C, qui soit aussi bonne ou meilleure que l'aptitude à la mise en oeuvre d'un matériau thermoplastique similaire exempt dudit pro-dégradant.

29. Procédé selon la revendication 1, pour des produits à base d'homopolymères, de copolymères séquencés ou de copolymères aléatoires polypropylène typiques, **caractérisé en ce que** le stabilisateur est formé par 50 ppm à 200 ppm de phénol encombré.

30. Procédé selon l'une quelconque des revendications précédentes, **caractérisé en ce que** le stabilisateur est formé par ou comprend au moins un composant choisi parmi les phosphites, les thio-synergistes, les phénols encombrés, les composés d'hydroquinone, les capteurs de radicaux acides C-H, les hydroxylamines, les amines encombrées et les absorbeurs UV.

31. Procédé selon l'une quelconque des revendications précédentes, **caractérisé en ce que** le pro-dégradant et les stabilisateurs sont ajoutés au matériau thermoplastique sous la forme d'un ou plusieurs mélanges maîtres.

32. Procédé selon l'une quelconque des revendications précédentes, **caractérisé en ce que** le matériau thermoplastique est choisi parmi n'importe quel matériau thermoplastique ou combinaison de matériaux thermoplastiques qui, seuls ou en combinaison, ont une aptitude à la mise en oeuvre permettant la fabrication de produits par extrusion, soufflage de feuille, moulage-soufflage, thermoformage, moulage en rotation, ou moulage par injection, en particulier toute qualité usinable de PE, PP et des combinaisons de ceux-ci.

33. Mélange d'additifs pour des matériaux thermoplastiques comprenant au moins un agent favorisant l'oxydation (pro-dégradant) et au moins un agent inhibiteur de dégradation (stabilisateur), **caractérisé en ce que** le pro-dégradant est un composé métallique soluble dans la graisse, pouvant être fabriqué par réaction d'un sel métallique avec un composé organique soluble dans la graisse dans un procédé utilisant un agent oxydant approprié, le produit final ayant une capacité d'oxydation, relativement à un certain agent de réduction, qui est supérieure à la capacité d'oxydation d'un produit de référence fabriqué à partir du même sel métallique et du même composé organique soluble dans la graisse sans utiliser un tel agent oxydant, tout en utilisant un stabilisateur ou une combinaison de stabilisateurs, ayant une stabilité à la mise en oeuvre appropriée et une stabilité à long terme en présence du pro-dégradant, dans lequel le composé organique soluble dans la graisse est ajouté en un excès stoechiométrique rapporté au sel métallique compris entre 1,2 et 100.

34. Mélange selon la revendication 33, **caractérisé en ce que** le pro-dégradant est fabriqué à partir de chlorure ferrique comme sel métallique, d'acide stéarique comme composé organique et d'hydro-peroxyde comme agent oxydant.

35. Mélange selon la revendication 33 ou la revendication 34, pour des produits basés sur des homopolymères de polypropylène, **caractérisé en ce que** le stabilisateur est une composition de stabilisateur typique contenant 200 ppm d'antioxydant phénolique et 600 ppm de phosphite organique, approprié pour la fabrication de produits ayant une durée de vie comprise entre 1-12 jours selon la norme ISO 4892-3 (60 °C/40 °C).

36. Mélange selon la revendication 33 ou la revendication 34, **caractérisé en ce que** le stabilisateur est la 3-xylyl-5,7-di-tert-butyl-benzofuranone, appropriée pour la fabrication de produits ayant une durée de vie comprise entre 1 et 4 jours selon la norme ISO-4892-3 (60 °C/40 °C).

37. Mélange selon la revendication 33 ou la revendication 34, **caractérisé en ce que** le stabilisateur est essentiellement un absorbeur UV lorsque des produits ayant une durée de vie comprise entre 5 et 12 jours selon la norme ISO 4892-3 (60 °C/40 °C) doivent être fabriqués.

38. Mélange selon la revendication 37, **caractérisé en ce que** ledit absorbeur UV est choisi parmi le Sanduvor PR25™, le Chimasorb 81™, le Cyasorb UV 5911™, le Tinuvin S26™, et le Tinuvin 1577™.

39. Mélange selon la revendication 33 ou la revendication 34, **caractérisé en ce que** le stabilisateur est essentiellement un antioxydant phénolique, lorsque des produits ayant une durée de vie comprise entre 4 et 13 jours selon la norme ISO 4892-3 (60 °C/40 °C) doivent être fabriqués.

40. Mélange selon la revendication 33 ou la revendication 34, **caractérisé en ce que** le stabilisateur est une ou plusieurs amines encombrées à faible masse moléculaire, lorsque des produits ayant une durée de vie comprise entre 15 et 25 jours selon la norme ISO 4892-3 (60 °C/40 °C) doivent être fabriqués.

41. Mélange selon la revendication 33 ou la revendication 34, **caractérisé en ce que** le stabilisateur est une ou plusieurs amines encombrées à masse moléculaire élevée, lorsque des produits ayant une durée de vie comprise entre 30 et 70 jours, selon la norme ISO 4892-3 (60 °C/40 °C), doivent être fabriqués.

42. Mélange selon la revendication 35 ou 34, pour des produits à base d'homopolymères, de copolymères séquencés ou de copolymères aléatoires de polypropylène typiques, **caractérisé en ce que** le stabilisateur est formé par 50 ppm à 200 ppm de phénol encombré.

43. Mélange selon l'une quelconque des revendications 34-42, **caractérisé en ce que** le mélange a la forme d'un ou plusieurs concentrés ou d'un ou plusieurs mélanges maîtres.

44. Matériau thermoplastique, **caractérisé en ce qu'**il est fabriqué selon l'une quelconque des revendications 1-32, ou avec l'un quelconque des mélanges selon les revendications 33-43.

45. Produit de matériau thermoplastique, selon la revendication 44, **caractérisé en ce qu'**il est mis en oeuvre par soufflage de feuille ou par extrusion en feuille avec un film ou une feuille comme produit final ou produit intermédiaire, ci-après dénommé film bi-orienté.

46. Produit selon la revendication 45, **caractérisé en ce qu'**il est choisi parmi les sacs en plastique, feuille de collecteur de la lumière solaire, autres types de feuille utilisables dans un but agricole, emballage alimentaire, autres emballages ou autres types de sacs.

47. Produit d'un matériau thermoplastique selon la revendication 44, **caractérisé en ce qu'**il est mis en oeuvre par moulage par injection pour donner des produits finaux ou intermédiaires moulés par injection.

48. Produit selon la revendication 47, **caractérisé en ce qu'**il est choisi parmi les emballages alimentaires, autres emballages, articles jetables à usage domestique ou à usage industriel ou usage avec des aliments et/ou boissons.

49. Produit d'un matériau thermoplastique selon la revendication 44, **caractérisé en ce qu'**il est mis en oeuvre par thermoformage pour donner des produits finaux ou intermédiaires thermoformés.

50. Produit selon la revendication 49, **caractérisé en ce qu'**il est choisi parmi les emballages alimentaires, autres emballages, articles jetables pour usage domestique ou industriel, ou usage avec des aliments et/ou des boissons.

51. Produit en matériau thermoplastique selon la revendication 44, **caractérisé en ce qu'**il est mis en oeuvre par extrusion pour donner des produits finaux ou intermédiaires extrudés.

52. Produit selon la revendication 51, **caractérisé en ce qu'**il est choisi parmi des produits à usage industriel, pour la construction, ci-après le transport, les constructions de bâtiments, les produits en forme de fibres, les produits en forme de ruban, ci-après dénommés produits tissés et non tissés.

53. Produit enun matériau thermoplastique selon la revendication 44, **caractérisé en ce qu'**il est mis en oeuvre par moulage-soufflage en produits finaux ou intermédiaires moulés-soufflés.

54. Produit selon la revendication 53, **caractérisé en ce qu'**il est choisi parmi les emballages alimentaires, autres emballages, articles jetables à usage domestique ou industriel ou usage avec des aliments et/ou des boissons.
